(19)

**Europäisches Patentamt**
**European Patent Office**
**Office européen des brevets**

(11)  **EP 4 226 554 B1**

(12)  # EUROPEAN PATENT SPECIFICATION

(45) Date of publication and mention
of the grant of the patent:
**01.07.2026 Bulletin 2026/27**

(21) Application number: **21799334.4**

(22) Date of filing: **08.10.2021**

(51) International Patent Classification (IPC):
*H04L 5/00* (2006.01)  *H04L 1/00* (2006.01)
*H04W 74/0833* (2024.01)  *H04L 1/18* (2023.01)
*H04L 1/1829* (2023.01)  *H04W 74/0836* (2024.01)

(52) Cooperative Patent Classification (CPC):
**H04L 5/0057; H04L 5/0094; H04W 74/0833;**
H04L 1/18; H04L 1/1861; H04L 5/0046;
H04L 5/0055; H04W 74/0836

(86) International application number:
**PCT/IB2021/059257**

(87) International publication number:
**WO 2022/079562 (21.04.2022 Gazette 2022/16)**

(54) **SYSTEMS AND METHODS FOR REPORTING APERIODIC CSI ON PUCCH DURING RANDOM ACCESS**

SYSTEME UND VERFAHREN ZUR MELDUNG APERIODISCHER CSI AUF PUCCH WÄHREND EINES DIREKTZUGRIFFS

SYSTÈMES ET PROCÉDÉS DE RAPPORT DE CSI APÉRIODIQUES SUR UN PUCCH PENDANT UN ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2020 PCT/CN2020/120282**

(43) Date of publication of application:
**16.08.2023 Bulletin 2023/33**

(73) Proprietor: **Telefonaktiebolaget LM Ericsson (publ)**
**164 83 Stockholm (SE)**

(72) Inventors:
• **LIN, Zhipeng**
**Nanjing, Jiangsu 211100 (CN)**
• **MURUGANATHAN, Siva**
**Stittsville, Ontario K2S 0R3 (CA)**
• **BLANKENSHIP, Yufei**
**Circle Kildeer, Illinois 60047 (US)**
• **GAO, Shiwei**
**Nepean, Ontario K2J 0H5 (CA)**
• **FALAHATI, Sorour**
**112 29 Stockholm (SE)**

• **FRÖBERG OLSSON, Jonas**
**585 74 Ljungsbro (SE)**
• **HARRISON, Robert Mark**
**Grapevine, Texas 76051 (US)**

(74) Representative: **Ericsson**
**Patent Development**
**Torshamnsgatan 21-23**
**164 80 Stockholm (SE)**

(56) References cited:
**US-A1- 2020 295 903**

• **MOTOROLA MOBILITY ET AL: "2-step RACH procedure", vol. RAN WG1, no. Chongqing, China; 20191014 - 20191020, 5 October 2019 (2019-10-05), XP051789813, Retrieved from the Internet <URL:http://www.3gpp.org/ftp/tsg_ran/ WG1_RL1/TSGR1_98b/Docs/R1-1911035.zip> [retrieved on 20191005]**

- **MODERATOR (ERICSSON): "Feature lead summary on timing relationship enhancements", vol. RAN WG1, no. e-Meeting; 20200817 - 20200828, 19 August 2020 (2020-08-19), XP051924011, Retrieved from the Internet <URL:https://ftp.3gpp.org/tsg_ran/WG1_RL1/TSGR1_102-e/Docs/R1-2006981.zip R1-2006981 FL summary on NTN timing relationships.docx> [retrieved on 20200819]**

**Description**

Related Applications

This application claims the benefit of PCT patent application serial number PCT/CN2020/120282, filed October 12, 2020.

Technical Field

The present disclosure relates to reporting Channel State Information (CSI).

Background

New Radio (NR) uses CP-OFDM (Cyclic Prefix Orthogonal Frequency Division Multiplexing) in both downlink (DL) (i.e., from a network node, gNB, or base station, to a user equipment or UE) and uplink (UL) (i.e., from UE to gNB). Discrete Fourier Transform (DFT) spread OFDM is also supported in the uplink. In the time domain, NR downlink and uplink are organized into equally sized subframes of 1ms each. A subframe is further divided into multiple slots of equal duration. The slot length depends on subcarrier spacing. For subcarrier spacing of $\Delta f = 15kHz,$ there is only one slot per subframe, and each slot consists of 14 OFDM symbols.

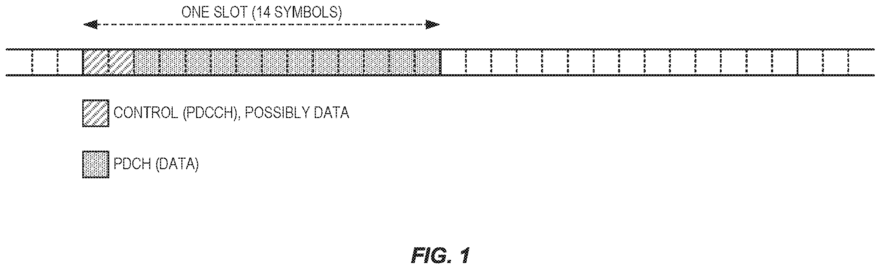

Data scheduling in NR is typically in slot basis, an example is shown in Figure 1 with a 14-symbol slot, where the first two symbols contain physical downlink control channel (PDCCH) and the rest contains physical shared data channel, either PDSCH (physical downlink shared channel) or PUSCH (physical uplink shared channel).

Different subcarrier spacing values are supported in NR. Figure 1 illustrates data scheduling in New Radio (NR) in a slot basis. The supported subcarrier spacing values (also referred to as different numerologies) are given by $\Delta f = (15 \times 2^\mu)$ *kHz* where $\mu \in \{0, 1, 2, 3, 4\}$. $\Delta f = 15kHz$ is the basic subcarrier spacing. The slot durations at different subcarrier spacings is given by $\dfrac{1}{2^\mu}$ ms.

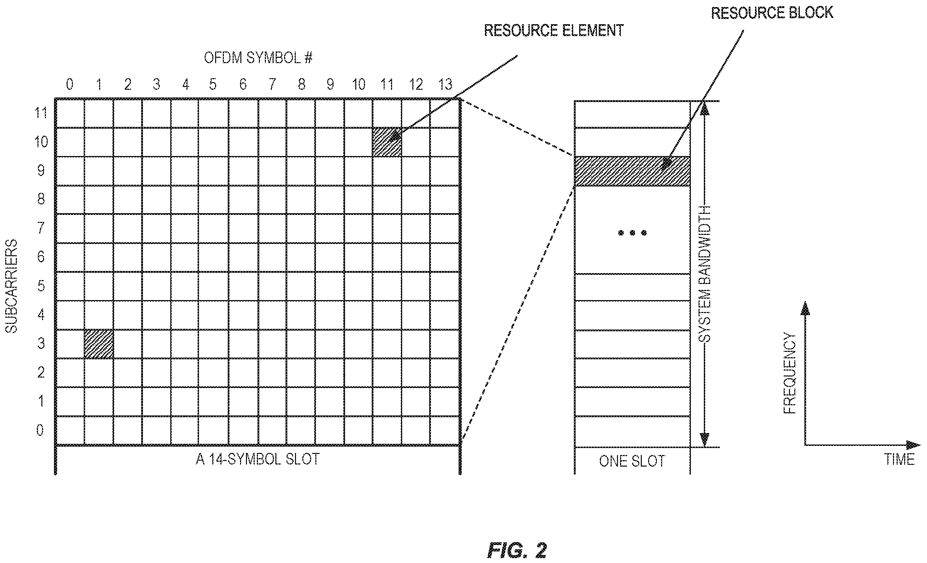

In the frequency domain, a system bandwidth is divided into resource blocks (RBs), each corresponds to 12 contiguous subcarriers. The RBs are numbered starting with 0 from one end of the system bandwidth. The basic NR physical time-frequency resource grid is illustrated in Figure 1, where only one resource block (RB) within a 14-symbol slot is shown. One OFDM subcarrier during one OFDM symbol interval forms one resource element (RE). Figure 2 illustrates the basic NR physical time-frequency resource grid.

Downlink (DL) and uplink (UL) data transmissions can be either dynamically or semi-persistently scheduled by a gNB. In case of dynamic scheduling, the gNB may transmit in a downlink slot downlink control information (DCI) to a UE on PDCCH (Physical Downlink Control Channel) about data carried on a physical downlink shared channel (PDSCH) to the UE and/or data on a physical uplink shared channel (PUSCH) to be transmitted by the UE. In case of semi-persistent scheduling, periodic data transmission in certain slots can be configured and activated/deactivated.

For each transport block data transmitted over PDSCH, a HARQ ACK is sent in a UL Physical Uplink Control Channel (PUCCH) on whether it is decoded successfully or not. An ACK is sent if it is decoded successfully and a NACK is sent otherwise.

PUCCH can also carry other UL control information (UCI) such as scheduling requests (SRs) and DL Channel State Information (CSI).

There are three DCI formats defined for scheduling PDSCH in NR, i.e., DCI format 1_0 and DCI format 1_1 which were introduced in NR Rel-15, and DCI format 1_2 which was introduced in NR Rel-16. DCI format 1_0 has a smaller size than DCI 1_1 and can be used when a UE is not fully connected to the network while DCI format 1_1 can be used for scheduling MIMO (Multiple-Input-Multiple-Output) transmissions with multiple MIMO layers.

In NR Rel-16, DCI format 1_2 was introduced for downlink scheduling. One of the main motivations for having the new DCI format is to be able to configure a very small DCI size which can provide some reliability improvement without losing much flexibility. The main design target of the new DCI format is thus to have DCI with configurable sizes for some fields with a minimum DCI size targeting a reduction of 10-16 bits relative to Rel-15 DCI format 1_0.

NR HARQ ACK/NACK feedback over PUCCH

When receiving a PDSCH in the downlink from a serving gNB at slot n, a UE feeds back a HARQ ACK at slot n+k over a PUCCH (Physical Uplink Control Channel) resource in the uplink to the gNB if the PDSCH is decoded successfully, otherwise, the UE sends a HARQ ACK/NACK at slot n+k to the gNB to indicate that the PDSCH is not decoded successfully. If two transport blocks (TBs) are carried by the PDSCH, then a HARQ ACK/NACK is reported for each TB.

For DCI format 1_0, k is indicated by a 3-bit PDSCH-to-HARQ-timing-indicator field. For DCI formats 1_1 and 1_2, k is indicated either by a 0-3 bit PDSCH-to-HARQ-timing-indicator field, if present, or by higher layer configuration through Radio Resource Control (RRC) signaling. Separate RRC configuration of PDSCH to HARQ-Ack timing are used for DCI formats 1_1 and 1_2.

For DCI format 1_1, if code block group (CBG) transmission is configured, a HARQ ACK/NACK for each CBG in a TB is reported instead.

In case of carrier aggregation (CA) with multiple carriers and/or Time Division Duplexing (TDD) operation, multiple aggregated HARQ ACK/NACK bits need to be sent in a single PUCCH.

In NR, up to four PUCCH resource sets can be configured to a UE. A PUCCH resource set with pucch-ResourceSetId=0 can have up to 32 PUCCH resources while for PUCCH resource sets with pucch-ResourceSetId=1 to 3, each set can have up to 8 PUCCH resources. A UE determines the PUCCH resource set in a slot based on the number of aggregated UCI (Uplink Control Information) bits to be sent in the slot. The UCI bits consists of HARQ ACK/NACK, scheduling request (SR), and channel state information (CSI) bits.

A 3 bits PUCCH resource indicator (PRI) field in DCI maps to a PUCCH resource in a set of PUCCH resources with a maximum of eight PUCCH resources. For the first set of PUCCH resources with pucch-ResourceSetId = 0 and when the number of PUCCH resources, $R_{PUCCI}$, in the set is larger than eight, the UE determines a PUCCH resource with index $r_{PUCCH}$, $0 \le r_{PUCCH} \le R_{PUCCH}-1$, for carrying HARQ-ACK information in response to detecting a last DCI format 1_0 or DCI format 1_1 in a PDCCH reception, among DCI formats 1_0 or DCI formats 1_1 the UE received with a value of the PDSCH-to-HARQ_feedback timing indicator field indicating a same slot for the PUCCH transmission, as:

$$r_{PUCCH} = \begin{cases} \left\lfloor \dfrac{n_{CCE,p} \cdot \left\lceil R_{PUCCH}/8 \right\rceil}{N_{CCE,p}} \right\rfloor + \Delta_{PRI} \cdot \left\lceil \dfrac{R_{PUCCH}}{8} \right\rceil & \text{if} \quad \Delta_{PRI} < R_{PUCCH} \bmod 8 \\ \left\lfloor \dfrac{n_{CCE,p} \cdot \left\lfloor R_{PUCCH}/8 \right\rfloor}{N_{CCE,p}} \right\rfloor + \Delta_{PRI} \cdot \left\lfloor \dfrac{R_{PUCCH}}{8} \right\rfloor + R_{PUCCH} \bmod 8 & \text{if} \quad \Delta_{PRI} \ge R_{PUCCH} \bmod 8 \end{cases}$$

where $N_{CCE,p}$ is a number of Control Channel Elements (CCEs) in CORESET $p$ of the PDCCH reception for the DCI format 1_0 or DCI format 1_1 as described in Subclause 10.1 of 3GPP TS38.213 v15.4.0, $n_{CCE,p}$ is the index of a first CCE for the PDCCH reception, and $\Delta_{PRI}$ is a value of the PUCCH resource indicator field in the DCI format 1_0 or DCI format 1_1.

For UEs in random access procedure, Msg4 PDSCH transmission or MsgB PDSCH transmission will be followed by an HARQ-ACK transmission on PUCCH if the PDSCH is correctly decoded. The PUCCH resource for this HARQ-ACK transmission is determined in the different ways depending on whether a 4-step RACH and or a 2-step RACH is selected.

- During the 4-step random access procedure, in response to the PDSCH reception with the UE contention resolution identity, the UE transmits HARQ-ACK information in a PUCCH as follows:

  ○ The PUCCH transmission is within a same active UL BWP as the PUSCH transmission scheduled by a RAR UL grant.

  ○ The PUCCH resource and the slot are determined by a three bit *"PUCCH resource indicator"* and a three bit *"PDSCH-to-HARQ_feedback timing indicator"* field respectively provided in DCI 1-0 with CRC scrambled by TC-RNTI.

  ○ A minimum time between the last symbol of the PDSCH reception and the first symbol of the corresponding PUCCH transmission with the HARQ-ACK information is equal to $N_{T,1}$ +0.5 msec. $N_{T,1}$ is a time duration of $N_1$ symbols corresponding to a PDSCH processing time for UE processing capability 1 when additional PDSCH DM-RS is configured. For $\mu = 0$, the UE assumes $N_{1,0} = 14$. See details in table 5.3.1 of 3GPP TS 38.214 V16.2.0.

- During the 2-step random access procedure, the UE will trigger a transmission of a PUCCH with HARQ-ACK information having ACK value if the RAR message(s) (MsgB) is for successRAR, where

  ○ a PUCCH resource for the transmission of the PUCCH is indicated by PUCCH resource indicator field of four bits in the *successRAR* from a PUCCH resource set that is provided by *pucch-ResourceCommon.*

  ○ a slot for the PUCCH transmission is indicated by a *HARQ Feedback Timing Indicator field* of 3 bits in the *successRAR* having a value k from {1, 2, 3, 4, 5, 6, 7, 8} and, with reference to slots for PUCCH transmission having duration T_slot, the slot is determined as *n+k+Δ,* where n is a slot of the PDSCH reception and Δ is as defined for PUSCH transmission in Table 6.1.2.1.1-5 in 3GPP TS 38.214 V16.2.0.

  ○ the UE does not expect the first symbol of the PUCCH transmission to be after the last symbol of the PDSCH reception by a time smaller than *N_(T,1)+0.5* msec where *N_(T,1)* is the PDSCH processing time for UE processing capability 1 in 3GPP TS 38.214 V16.2.0.

Five PUCCH formats are defined in NR, i.e., PUCCH formats 0 to 4. UE transmits UCI in a PUCCH using

- PUCCH format 0 if

  ○ the transmission is over 1 symbol or 2 symbols,
  ○ the number of HARQ-ACK information bits with positive or negative SR (HARQ-ACK/SR bits) is 1 or 2

- PUCCH format 1 if

  ○ the transmission is over 4 or more symbols,
  ○ the number of HARQ-ACK/SR bits is 1 or 2

- PUCCH format 2 if

  ○ the transmission is over 1 symbol or 2 symbols,
  ○ the number of UCI bits is more than 2

- PUCCH format 3 if

  ○ the transmission is over 4 or more symbols,
  ○ the number of UCI bits is more than 2,

- PUCCH format 4 if

  ○ the transmission is over 4 or more symbols,
  ○ the number of UCI bits is more than 2.

PUCCH formats 0 and 2 use one or two OFDM symbols while PUCCH formats 1, 3, and 4 can span from 4 to 14 symbols. Thus, PUCCH format 0 and 2 are referred to as short PUCCH while PUCCH formats 1, 3, and 4 as long PUCCH.

Short PUCCH formats

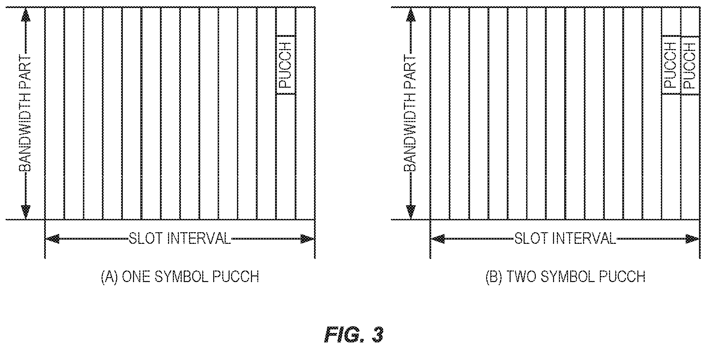

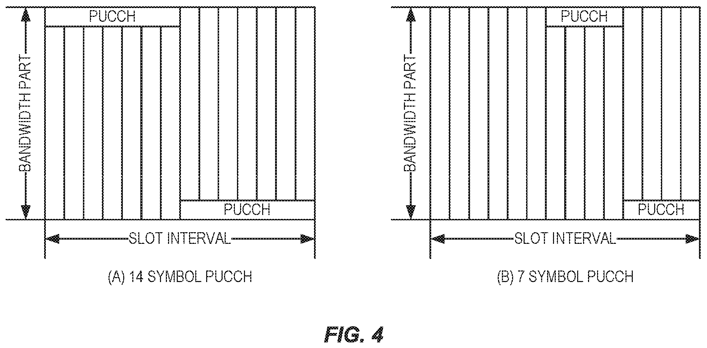

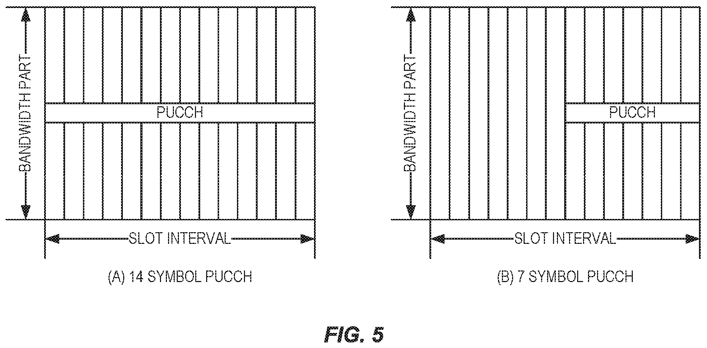

A PUCCH format 0 resource can be one or two OFDM symbols within a slot in time domain and one RB in frequency domain. UCI is used to select a cyclic shift of a computer-generated length 12 base sequence which is mapped to the RB. The starting symbol and the starting RB are configured by RRC. In case of 2 symbols are configured, the UCI bits are repeated in 2 consecutive symbols.
A PUCCH format 2 resource can be one or two OFDM symbols within a slot in time domain and one or more RB in frequency domain. UCI in PUCCH Format 2 is encoded with RM (Reed-Muller) codes (≤11bits UCI+CRC) or Polar codes (> 11 bit UCI+CRC) and scrambled. In case of 2 symbols are configured, UCI is encoded and mapped across two consecutive symbols.
Intra-slot frequency hopping (FH) may be enabled in case of 2 symbols are configured for PUCCH formats 0 and 2. If FH is enabled, the starting Physical Resource Block (PRB0 in the second symbol is configured by Radio Resource Control (RRC). Cyclic shift hopping is used when 2 symbols are configured such that different cyclic shifts are used in the 2 symbols. Figure 3 illustrates an example of one and two symbol short PUCCH without FH.
Long PUCCH formats: A PUCCH format 1 resource is 4 - 14 symbols long and 1 PRB wide per hop. A computer-generated length 12 base sequence is modulated with UCI and weighted with time-domain OCC code. Frequency-hopping with one hop within the active UL BWP for the UE is supported and can be enabled/disabled by RRC. Base sequence hopping across hops is enabled in case of FH and across slots in case of no FH.
A PUCCH Format 3 resource is 4 - 14 symbols long and one or multiple PRB wide per hop. UCI in PUCCH Format 3 is encoded with Reed-Muller (RM) codes (≤11 bit UCI+CRC) or Polar codes (>11 bit UCI+CRC) and scrambled.
A PUCCH Format 4 resource is also 4 - 14 symbols long but 1 PRB wide per hop. It has a similar structure as PUCCH format 3 but can be used for multi-UE multiplexing. Figure 4 illustrates an example 14-symbol and 7-symbol long PUCCH with intra-slot FH enabled. Figure 5 illustrates an example 14-symbol and 7-symbol long PUCCH with intra-slot FH disabled.

For PUCCH formats 1, 3, or 4, a UE can be configured a number of slots, $N_{\text{PUCC}}^{\text{repeat}}$, for repetitions of a PUCCH transmission by respective nrofSlots. For $N_{\text{PUCCH}}^{\text{repeat}} > 1$,

- the UE repeats the PUCCH transmission with the UCI over $N_{\text{PUCC}}^{\text{repeat}}$ slots

- a PUCCH transmission in each of the $N_{\text{PUCC}}^{\text{repeat}}$ slots has a same number of consecutive symbols,

- a PUCCH transmission in each of the $N_{\text{PUCC}}^{\text{repeat}}$ slots has a same first symbol,

- if the UE is configured to perform frequency hopping for PUCCH transmissions across different slots

  ○ the UE performs frequency hopping per slot
  ○ the UE transmits the PUCCH starting from a first PRB in slots with even number and starting from the second PRB in slots with odd number. The slot indicated to the UE for the first PUCCH transmission has number 0 and each subsequent slot until the UE transmits the PUCCH in $N_{\text{PUCC}}^{\text{repeat}}$ slots is counted regardless of whether or not the UE transmits the PUCCH in the slot
  ○ the UE does not expect to be configured to perform frequency hopping for a PUCCH transmission within a slot

- If the UE is not configured to perform frequency hopping for PUCCH transmissions across different slots and if the UE is configured to perform frequency hopping for PUCCH transmissions within a slot, the frequency hopping pattern between the first PRB and the second PRB is same within each slot.

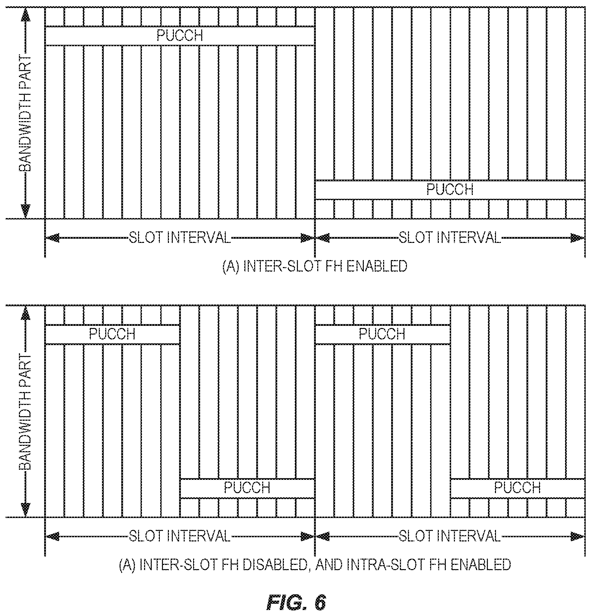

Figure 6 illustrates an example of PUCCH repetition in two slots with (a) inter-slot FH enabled and (b) inter-slot FH disabled while intra-slot FH enabled.

Sub-slot based PUCCH transmission: In NR Rel-16, sub-slot based PUCCH transmission was introduced so that HARQ-Ack associated with different type of traffic can be multiplexed in a same UL slot, each transmitted in a different sub-slot. The sub-slot size can be higher layer configured to either 2 symbols or 7 symbols. In case of sub-slot configuration each with 2 symbols, there are 7 sub-slots in a slot. In case of sub-slot with 7 symbols, there are two sub-slots in a slot.

HARQ A/N enhancement for URLLC in NR Rel-16: In NR Rel 16, a higher priority may be assigned to PDSCHs carrying URLLC (Ultra-reliable Low latency) traffic and indicated in DCIs scheduling the PDSCHs. HARQ Ack/Nack information for PDSCHs with higher priority is transmitted separately from HARQ A/N information for other PDSCHs. This allows HARQ A/N for URLLC traffic be transmitted early in different PUCCH resources and more reliably.

Furthermore, in NR Rel-16, it has been agreed that at least one sub-slot configuration for PUCCH can be UE-specifically configured and that multiple HARQ Ack/Nack transmissions per slot are possible. The sub-slot configuration supports periodicities of 2 symbols (i.e., seven 2-symbol PUCCH occasions per slot) and 7 symbols (i.e., two 7-symbol PUCCH occasions per slot). One of the reasons for introducing these sub-slot configurations in NR Rel-16 is to enable the possibility for multiple opportunities of HARQ Ack/Nack transmissions within a slot without needing to configure several PUCCH resources. For example, in Rel-16, a UE running URLLC service may be configured with a possibility of receiving PDCCH in every second OFDM symbol e.g., symbol 0, 2, 4, ..., 12 and be configured with a PUCCH resource with sub-slot configuration seven 2-symbol sub-slots within a slot for HARQ-ACK transmission also in every second symbol, e.g., 1, 3, ...., 13. For a Rel-16 UE configured with sub-slots for PUCCH transmission, the PDSCH-to-HARQ feedback timing indicator field in DCI indicates the timing offset in terms of sub-slots instead of slots.

CSI framework in NR: In NR, a UE can be configured with multiple CSI reporting settings (each represented by a higher layer parameter *CSI-ReportConfig* with an associated identity *ReportConfigID*) and multiple CSI resource settings (each represented by a higher layer parameter *CSI-ResourceConfig with* an associated identity *CSI-ResourceConfigId*). Each CSI resource setting can contain multiple CSI resource sets (each represented by a higher layer parameter Non Zero Power *(NZP)-CSI-RS-ResourceSet* with an associated identity *NZP-CSI-RS-ResourceSetId for channel measurement or* by a higher layer parameter *CSI-IM-ResourceSet* with an associated identity *CSI-IM-ResourceSetId for interference measurement*), and each NZP CSI-RS resource set for channel measurement can contain up to 8 NZP CSI-RS resources. For each CSI reporting setting, a UE feeds back a set of CSIs, which may include one or more of a CRI (CSI-RS resource indicator), a Rank Indicator (RI), a Precoding Matrix Indicator (PMI) and a Channel Quality Indication (CQI) per Codeword (CW), depending on the configured report quantity.

Each Reporting Setting *CSI-ReportConfig* is associated with a single downlink BWP (indicated by higher layer parameter *BWP-Id*) given in the associated *CSI-ResourceConfig* for channel measurement and contains the parameter(s) for one CSI reporting band.

In each CSI reporting setting, it contains at least the following information:

- A CSI resource setting for channel measurement based on NZP CSI-RS resources (represented by a higher layer parameter *resourcesForChannelMeasurement)*
- A CSI resource setting for interference measurement based on CSI-IM resources (represented by a higher layer parameter *csi-IM-ResourcesForInterference)*
- Optionally, a CSI resource setting for interference measurement based on NZP CSI-RS resources (represented by a higher layer parameter *nzp-CSI-RS-ResourcesForInterference)*
- Time-domain behavior, i.e., periodic, semi-persistent, or aperiodic reporting (represented by a higher layer parameter *reportConfigType)*
- Frequency granularity, i.e., wideband or subband
- CSI parameters to be reported such as RI, PMI, CQI, L1-RSRP/L1_SINR and CRI in case of multiple NZP CSI-RS resources in a resource set is used for channel measurement (represented by a higher layer parameter *report-Quantity, such as* 'cri-RI-PMI-CQI ' 'cri-RSRP', or 'ssb-Index-RSRP' )
- Codebook types, i.e., type I or II if reported, and codebook subset restriction
- Measurement restriction

For periodic and semi-static CSI reporting, only one NZP CSI-RS resource set can be configured for channel measurement and one CSI-IM resource set for interference measurement. For aperiodic CSI reporting, a CSI resource setting for channel measurement can contain more than one NZP CSI-RS resource set for channel measurement. If the CSI resource setting for channel measurement contains multiple NZP CSI-RS resource sets for aperiodic CSI report, only one NZP CSI-RS resource set can be selected and indicated to a UE. For aperiodic CSI reporting, a list of trigger states is configured (given by the higher layer parameters CSI-AperiodicTriggerStateList). Each trigger state in CSI-Aperiodic-TriggerStateList contains a list of associated CSI-ReportConfigs indicating the Resource Set IDs for channel and optionally for interference. For a UE configured with the higher layer parameter CSI-AperiodicTriggerStateList, if a Resource Setting linked to a CSI-ReportConfig has multiple aperiodic resource sets, only one of the aperiodic CSI-RS resource sets from the Resource Setting is associated with the trigger state, and the UE is higher layer configured per trigger state per Resource Setting to select the one NZP CSI-RS resource set from the Resource Setting.

When more than one NZP CSI-RS resources are contained in the selected NZP CSI-RS resource set for channel measurement, a CSI-RS resource indicator (CRI) is reported by the UE to indicate to the gNB about the one selected NZP CSI-RS resource in the resource set, together with RI, PMI and CQI associated with the selected NZP CSI-RS resource. This type of CSI assumes that a PDSCH is transmitted from a single transmission point (TRP) and the CSI is also referred to as single TRP CSI.

Aperiodic CSI feedback on PUCCH: In current NR specifications, aperiodic CSI feedback can only be carried via PUSCH. Furthermore, in current NR specifications, the aperiodic CSI feedback can only be trigged via uplink related DCI (i.e., DCI formats 0_1 and 0_2) or RAR (though CSI request bit is reserved so far). However, this is not flexible in a scenario that is downlink heavy where the gNB would schedule the UE with PDSCH via downlink related DCI (i.e., DCI formats 1_1 and 1_2) more often than scheduling the UE with PUSCH via uplink related DCI. To improve network scheduling flexibility, it is beneficial to support triggering of aperiodic CSI via downlink related DCI. In this case, the aperiodic CSI will be carried on PUCCH.

In United States Patent Application Publication 2020/0295903 "PUCCH RESOURCE INDICATION FOR CSI AND HARQ FEEDBACK" (hereinafter referred to as [1]), a solution is proposed where a CSI request field is introduced in downlink related DCI which would be used to trigger aperiodic CSI reports on PUCCH. Furthermore, the solution in [1] proposes to reuse the existing PUCCH resource indication field in downlink related DCI to indicate the PUCCH resource for aperiodic CSI feedback. Depending on if the downlink related DCI carries a downlink grant for PDSCH and/or a CSI request, the PUCCH resource indication field can be interpreted differently according to the solution in [1].

In [1], one solution is proposed where the Aperiodic CSI and the HARQ-ACK corresponding to the PDSCH being scheduled by the downlink related DCI are multiplexed and sent on the same PUCCH resource. To address the cases where the PDSCH processing time and the processing time for aperiodic CSI are different, another solution is proposed in [1] where the Aperiodic CSI and HARQ-ACK corresponding to the PDSCH being scheduled by the downlink related DCI are transmitted in different slots.

In some disclosures, methods on using uplink DCI to indicate whether A-CSI is on PUCCH or PUSCH, on support of specific PUCCH format, i.e., format 2, 3, 4, on A-CSI on PUCCH handling when colliding with other CSI on the same slot are provided.

Although aperiodic CSI transmission on PUCCH is discussed in connected mode in [1] aperiodic CSI feedback on PUCCH during random access and its signaling details have not been disclosed in the prior art. Acquiring early CSI reports during random access is well motivated since it provides the gNB to perform link adaptation early using the early aperiodic CSI report reported on PUCCH. Hence, it is an open problem on how to indicate/trigger an aperiodic CSI report on PUCCH during random access.

Motorla Mobility et al.: "2-step RACH procedure", 3GPP Draft; R1-1911035, discloses, inter alia, the following proposals: In 2-step RACH, a CSI request can be included in a successRAR of MsgB PDSCH. NR supports multiplexing a CSI report triggered by a successRAR in a PUCCH resource carrying HARQ-ACK information of the successRAR. NR supports more than one common PUCCH resource set configuration for 2-step RACH. PDSCH-to-HARQ-ACK feedback timing for MsgB is determined based on a PDSCH-to-HARQ-ACK feedback timing indicator field in DCI and UE-specific timing offset explicitly indicated in MsgB PDSCH.

Summary

The present disclosure provides methods, a wireless device and a base station as defined in the independent claims. Further developments are set forth in the dependent claims.

Systems and methods for reporting aperiodic Channel State Information (CSI) on Physical Uplink Control Channel (PUCCH) during random access are provided. In some embodiments, a method performed by a wireless device for reporting channel state information includes one or more of: determining at least one of: a timing offset for the aperiodic CSI on PUCCH; and a PUCCH resource to be used for the aperiodic CSI; and reporting aperiodic CSI on PUCCH according to the at least one of the timing offset for the aperiodic CSI on PUCCH and the PUCCH resource to be used for the aperiodic CSI. In some embodiments, indications of timing offset and/or PUCCH resource for the aperiodic CSI on PUCCH can be received via one or more of the following: as part of the Random Access Response (RAR) which may include one or more of message 2 of 4-step random access procedure; successRAR of 2-step random access procedure, and fallbackRAR when the wireless device falls back from 2-step random access to 4-step random access. In this way, the base station can perform link adaptation early using the early aperiodic CSI report on PUCCH which is acquired during random access.

In this disclosure, methods are proposed for reporting A-CSI on PUCCH during random access procedure. Specifically, methods for indicating timing offset and PUCCH resource for the aperiodic CSI on PUCCH are proposed wherein the indications may be received via one or more of the following:

(a) as part of the random access response (RAR) which may include one or more of message 2 of 4-step random access procedure

(b) successRAR of 2-step random access procedure, and

(c) fallbackRAR when the UE falls back from 2-step random access to 4-step random access

One potential advantage of some of the embodiments included herein is that the base station (e.g., gNB) can perform link adaptation early using the early aperiodic CSI report on PUCCH which is acquired during random access.

Brief Description of the Drawings

The accompanying drawing figures incorporated in and forming a part of this specification illustrate several aspects of the disclosure, and together with the description serve to explain the principles of the disclosure.

Figure 1 illustrates data scheduling in New Radio (NR) in a slot basis;
Figure 2 illustrates the basic NR physical time-frequency resource grid;
Figure 3 illustrates an example of one and two symbol short Physical Uplink Control Channel (PUCCH) without Frequency Hopping (FH);
Figure 4 illustrates an example 14-symbol and 7-symbol long PUCCH with intra-slot FH enabled;
Figure 5 illustrates an example 14-symbol and 7-symbol long PUCCH with intra-slot FH disabled;
Figure 6 illustrates an example of PUCCH repetition in two slots with (a) inter-slot FH enabled and (b) inter-slot FH disabled while intra-slot FH enabled;
Figure 7 illustrates one example of a cellular communications system according to some embodiments of the present disclosure;
Figure 8 illustrates a method performed by a wireless device for reporting channel state information during random access procedure, according to some other embodiments of the present disclosure;
Figure 9 illustrates a method performed by a base station for receiving channel state information during random access procedure, according to some other embodiments of the present disclosure;
Figure 10 illustrates an Aperiodic Channel State Information (A-CSI) report on PUCCH determined in random access procedure, according to some embodiments of the present disclosure;

Figure 11 illustrates an example showing A-CSI report on PUCCH being allocated in successRAR, according to some embodiments of the present disclosure;

Figure 12 illustrates an example showing A-CSI report on PUCCH being allocated in fallbackRAR, according to some embodiments of the present disclosure;

Figure 13 illustrates an A-CSI report on PUCCH allocated in fallbackRAR, according to some embodiments of the present disclosure;

Figure 14 is a schematic block diagram of a radio access node according to some embodiments of the present disclosure;

Figure 15 is a schematic block diagram that illustrates a virtualized embodiment of the radio access node of Figure 14 according to some embodiments of the present disclosure;

Figure 16 is a schematic block diagram of the radio access node of Figure 14 according to some other embodiments of the present disclosure;

Figure 17 is a schematic block diagram of a User Equipment device (UE) according to some embodiments of the present disclosure;

Figure 18 is a schematic block diagram of the UE of Figure 17 according to some other embodiments of the present disclosure;

Figure 19 illustrates a telecommunication network connected via an intermediate network to a host computer in accordance with some embodiments of the present disclosure;

Figure 20 is a generalized block diagram of a host computer communicating via a base station with a UE over a partially wireless connection in accordance with some embodiments of the present disclosure;

Figure 21 is a flowchart illustrating a method implemented in a communication system in accordance with one embodiment of the present disclosure;

Figure 22 is a flowchart illustrating a method implemented in a communication system in accordance with one embodiment of the present disclosure;

Figure 23 is a flowchart illustrating a method implemented in a communication system in accordance with one embodiment of the present disclosure; and

Figure 24 is a flowchart illustrating a method implemented in a communication system in accordance with one embodiment of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

**Transmission/Reception Point (TRP):** In some embodiments, a TRP may be either a network node, a radio head, a spatial relation, or a Transmission Configuration Indicator (TCI) state. A TRP may be represented by a spatial relation or a TCI state in some embodiments. In some embodiments, a TRP may be using multiple TCI states.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

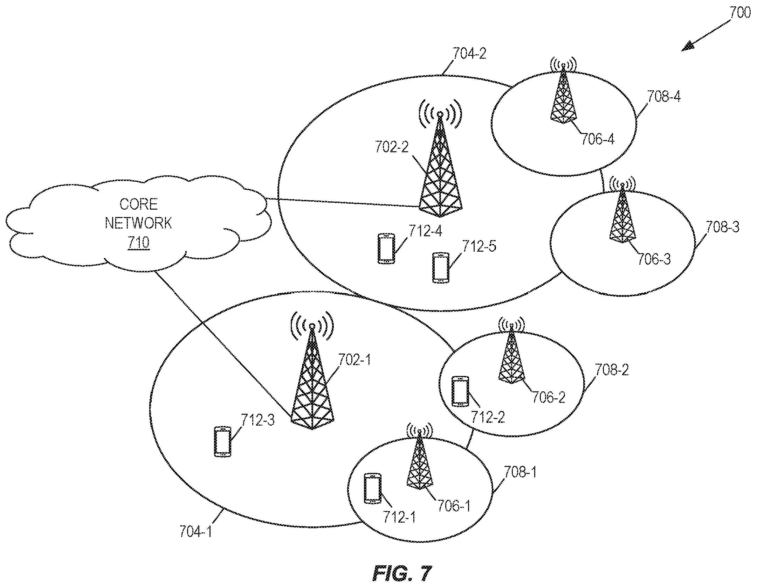

Figure 7 illustrates one example of a cellular communications system 700 in which embodiments of the present disclosure may be implemented. In the embodiments described herein, the cellular communications system 700 is a 5G system (5GS) including a Next Generation RAN (NG-RAN) and a 5G Core (5GC). In this example, the RAN includes base stations 702-1 and 702-2, which in the 5GS include NR base stations (gNBs) and optionally next generation eNBs (ng-eNBs) (e.g., LTE RAN nodes connected to the 5GC), controlling corresponding (macro) cells 704-1 and 704-2. The base stations 702-1 and 702-2 are generally referred to herein collectively as base stations 702 and individually as base station 702. Likewise, the (macro) cells 704-1 and 704-2 are generally referred to herein collectively as (macro) cells 704 and individually as (macro) cell 704. The RAN may also include a number of low power nodes 706-1 through 706-4 controlling corresponding small cells 708-1 through 708-4. The low power nodes 706-1 through 706-4 can be small base stations (such as pico or femto base stations) or Remote Radio Heads (RRHs), or the like. Notably, while not illustrated, one or more of the small cells 708-1 through 708-4 may alternatively be provided by the base stations 702. The low power nodes 706-1 through 706-4 are generally referred to herein collectively as low power nodes 706 and individually as low power node 706. Likewise, the small cells 708-1 through 708-4 are generally referred to herein collectively as small cells 708 and individually as small cell 708. The cellular communications system 700 also includes a core network 710, which in the 5G System (5GS) is referred to as the 5GC. The base stations 702 (and optionally the low power nodes 706) are connected to the core network 710.

The base stations 702 and the low power nodes 706 provide service to wireless communication devices 712-1 through 712-5 in the corresponding cells 704 and 708. The wireless communication devices 712-1 through 712-5 are generally referred to herein collectively as wireless communication devices 712 and individually as wireless communication device 712. In the following description, the wireless communication devices 712 are oftentimes UEs, but the present disclosure is not limited thereto.

Acquiring early Channel State Information (CSI) reports during random access is well motivated since it provides the gNB to perform link adaptation early using the early aperiodic CSI report reported on Physical Uplink Control Channel (PUCCH). Hence, it is an open problem on how to indicate/trigger an aperiodic CSI report on PUCCH during random access.

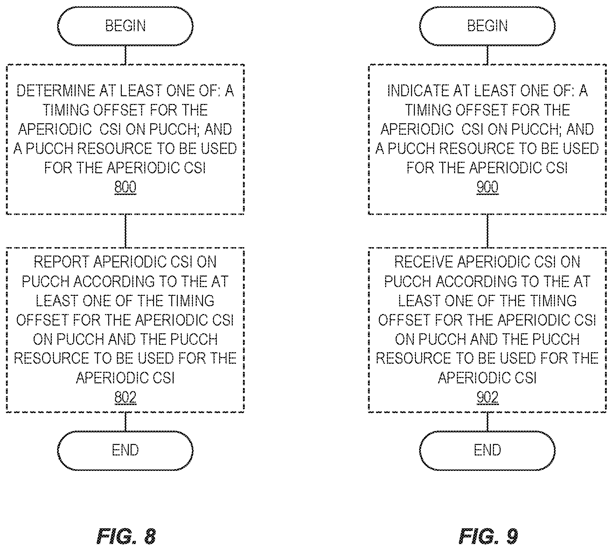

Systems and methods for reporting aperiodic CSI on PUCCH during random access are provided. Figure 8 illustrates a method performed by a wireless device for reporting channel state information during random access procedure, according to some other embodiments of the present disclosure. In some embodiments, a method performed by a wireless device for reporting channel state information includes one or more of: determining (step 800) at least one of: a timing offset for the aperiodic CSI on PUCCH; and a PUCCH resource to be used for the aperiodic CSI; and reporting (step 802) aperiodic CSI on PUCCH according to the at least one of the timing offset for the aperiodic CSI on PUCCH and the PUCCH resource to be used for the aperiodic CSI. In some embodiments, indications of timing offset and/or PUCCH resource for the aperiodic CSI on PUCCH can be received via one or more of the following: as part of the Random Access Response (RAR) which may include one or more of message 2 of 4-step random access procedure; successRAR of 2-step random access procedure, and fallbackRAR when the wireless device falls back from 2-step random access to 4-step random access. In this way, the base station can perform link adaptation early using the early aperiodic CSI report on PUCCH which is acquired during random access.

Figure 9 illustrates a method performed by a base station for receiving channel state information during random access procedure, according to some other embodiments of the present disclosure. In some embodiments, a method is performed by a base station for receiving channel state information, the method comprising one or more of: indicating (step 900) at least one of a timing offset for the aperiodic CSI on PUCCH; and a PUCCH resource to be used for the aperiodic CSI; and receiving (step 902) an aperiodic CSI report on PUCCH according to the at least one of the timing offset for the aperiodic CSI on PUCCH and the PUCCH resource to be used for the aperiodic CSI.

Embodiment 1: Timing of Aperiodic CSI report on PUCCH provided by RAR/MsgB in random access procedure.

In this embodiment, for UEs performing the random access procedure, the timing of the A-CSI to be transmitted on PUCCH can be explicitly signaled or implicitly indicated in RAR. The RAR can be any one of the following:

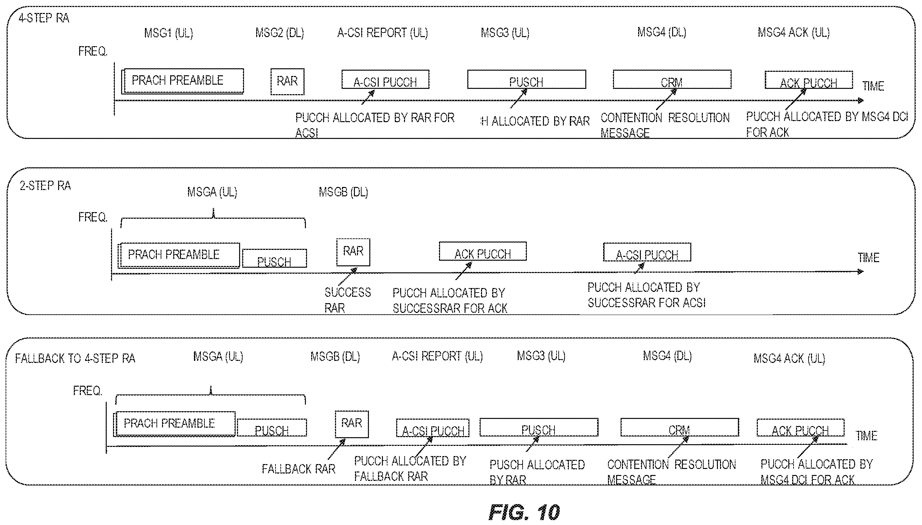

- Msg2 (Message 2) as shown in the top of Figure 10 in 4-step random access procedure,

- *successRAR* as shown in the middle of Figure 10 in 2-step random access procedure, or

- *fallbackRAR* as shown in the bottom of Figure 10 when UEs fallback from 2-step random access to 4-step random access procedure.

Although in the top of Figure 10 (for 4-step RA), A-CSI on PUCCH is shown to be transmitted before Msg3 PUSCH, in some embodiments, A-CSI on PUCCH may be transmitted after Msg3 PUSCH. Similarly, in the bottom of Figure 10 (for Fallback to 4-step RA), although A-CSI on PUCCH is shown to be transmitted before Msg3 PUSCH, A-CSI on PUCCH may be transmitted after Msg3 PUSCH in some embodiments.

In some further embodiments, for 4-step RA (top of Figure 10) and for Fallback to 4-step RA (bottom of Figure 10), when the A-CSI on PUCCH collides with Msg3 PUSCH, the A-CSI is multiplexed on Msg3 PUSCH.

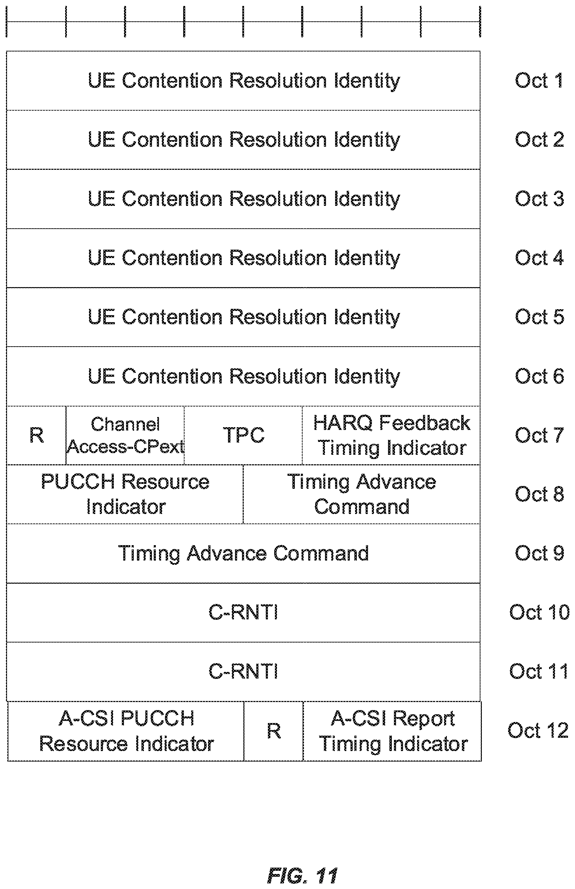

A-CSI on PUCCH triggered via successRAR: In one example embodiment, a PUCCH resource specifically for the A-CSI transmission can be indicated by *successRAR,* as illustrated in Figure 11. The "A-CSI PUCCH Resource Indicator" field in *successRAR* provides an indication of the PUCCH resource to be used for A-CSI transmission on PUCCH which, in this example embodiment, is different from the PUCCH resource indicated for HARQ feedback (i.e., different from 'PUCCH Resource Indicator' field). The timing for the A-CSI report on PUCCH is provided by a dedicated field 'A-CSI report timing indicator' in *successRAR.* In one particular example, field sizes of 4 bits and 3 bits are used for the "A-CSI PUCCH Resource Indicator" and 'A-CSI report timing indicator' fields, respectively.

In another example embodiment, as shown in Figure 11, the *SuccessRAR* is enhanced to add another octet (i.e., Oct 12) which carries any one of "A-CSI PUCCH Resource Indicator" and "A-CSI PUCCH Resource Indicator" fields. In this embodiment, *SuccessRAR* has fixed size.

In another example embodiment, the *SuccessRAR* may have variable size in which case the octet carrying any one of "A-CSI PUCCH Resource Indicator" and "A-CSI PUCCH Resource Indicator" fields may be optionally present, and one bit (e.g., a reserved field bit R in Octet 7 of Figure 11) in *SuccessRAR* may be used to indicate if the Octet carrying any one of "A-CSI PUCCH Resource Indicator" and "A-CSI PUCCH Resource Indicator" fields is present or not. If the bit is set, then the Octet carrying any one of "A-CSI PUCCH Resource Indicator" and "A-CSI PUCCH Resource Indicator" fields is present. If the bit is not set, then the Octet carrying any one of "A-CSI PUCCH Resource Indicator" and "A-CSI PUCCH Resource Indicator" fields is not present.

In another example embodiment, the 'A-CSI PUCCH Resource Indicator' field in *successRAR* may refer to a PUCCH resource from a set of predefined cell-specific PUCCH resources in a PUCCH resource set that is specified in 3GPP specifications (for instance, in the form of a table $2^N$ rows where each row predefines a set of cell-specific PUCCH resources/parameters where $N$ is the number of bits in the "A-CSI PUCCH Resource Indicator" field). In this example embodiment, the PUCCH resource set to be used for 'A-CSI PUCCH Resource Indicator' field is different from the PUCCH resource set used for HARQ feedback indicated by the 'PUCCH Resource Indicator' field. The PUCCH resource set to be used for 'A-CSI PUCCH Resource indicator' field may contain PUCCH formats that are suitable for carrying CSI report such as PUCCH formats 2, 3, or 4.

In another example embodiment, PUCCH Resource Indicator for HARQ feedback on PUCCH scheduled in *successRAR* is also used by A-CSI on PUCCH. In one particular embodiment, although one field is used for indicating the PUCCH Resource for HARQ feedback and A-CSI on PUCCH, the PUCCH resources to be used for HARQ feedback and A-CSI may be different. These PUCCH resources may belong to different PUCCH resource sets predefined/specified in 3GPP specifications.

In another example embodiment, the timing for the A-CSI on PUCCH provided may be defined with respect to the PDSCH that carries the *successRAR.* That is, the slot in which the A-CSI on PUCCH is to be transmitted is determined as $n+k'+\Delta$, where $n$ is the slot in which the PDSCH carrying the *successRAR* is received, $k'$ is the timing offset indicated by the 'A-CSI report timing indicator' field in *successRAR,* and $\Delta$ is an additional offset that depends on the subcarrier spacing used for PUCCH transmission.

In another example embodiment, the timing for the A-CSI on PUCCH provided may be defined with respect to the PUCCH that carries the HARQ transmission. That is, the slot in which the A-CSI on PUCCH is to be transmitted is determined as $n'+k'$, where $n$ is the slot in which the HARQ is transmitted on PUCCH, and $k'$ is the timing offset indicated by the 'A-CSI report timing indicator' field in *successRAR.*

In another example embodiment, HARQ Feedback Timing Indicator in *successRAR* is also used at least partly for slot indication of PUCCH for A-CSI report transmission. Here "partly" means the actual slot can be determined by not only "HARQ Feedback Timing Indicator" but also some other parameters or by adding another a fixed or predetermined slot level offset.

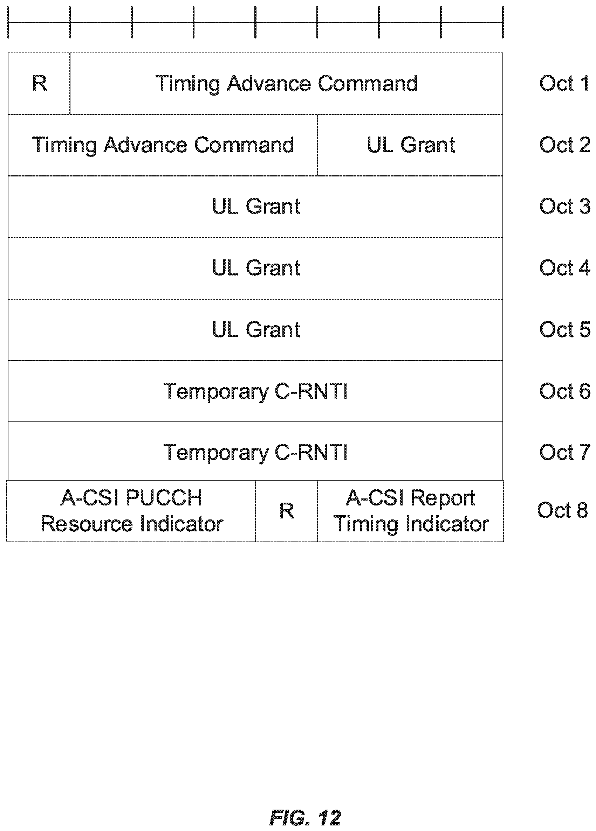

A-CSI on PUCCH triggered via fallbackRAR: In one example embodiment, a PUCCH resource specifically for the A-CSI transmission can be indicated by *fallbackRAR,* as illustrated in Figure 12. The "A-CSI PUCCH Resource Indicator" field in *fallbackRAR* provides an indication of the PUCCH resource to be used for A-CSI transmission on PUCCH. The timing for the A-CSI report on PUCCH is provided by a dedicated field 'A-CSI report timing indicator' in *fallbackRAR.* In one particular example, field sizes of 4 bits and 3 bits are used for the "A-CSI PUCCH Resource Indicator" and 'A-CSI report timing indicator' fields, respectively.

In another example embodiment, as shown in Figure 12, the *fallbackRAR* is enhanced to add another octet (i.e., Oct 8) which carries any one of "A-CSI PUCCH Resource Indicator" and "A-CSI PUCCH Resource Indicator" fields. In this embodiment, *fallbackRAR* has fixed size.

In another example embodiment, the *fallbackRAR* may have variable size in which case the octet carrying any one of "A-CSI PUCCH Resource Indicator" and "A-CSI PUCCH Resource Indicator" fields may be optionally present, and one bit (e.g., a reserved field bit R in Octet 1 of Figure 12) in *fallbackRAR* may be used to indicate if the Octet carrying any one of "A-CSI PUCCH Resource Indicator" and "A-CSI PUCCH Resource Indicator" fields is present or not. If the bit is set, then the Octet carrying any one of "A-CSI PUCCH Resource Indicator" and "A-CSI PUCCH Resource Indicator" fields is present. If the bit is not set, then the Octet carrying any one of "A-CSI PUCCH Resource Indicator" and "A-CSI PUCCH Resource Indicator" fields is not present.

In another example embodiment, the 'A-CSI PUCCH Resource Indicator' field in *fallbackRAR* may refer to a PUCCH resource from a set of predefined cell-specific PUCCH resources in a PUCCH resource set that is specified in 3GPP specifications (for instance, in the form of a table $2^N$ rows where each row predefines a set of cell-specific PUCCH resources/parameters where $N$ is the number of bits in the "A-CSI PUCCH Resource Indicator" field). In this example embodiment, the PUCCH resource set to be used for 'A-CSI PUCCH Resource Indicator' field is different from the PUCCH resource set used for HARQ feedback indicated by Msg4 DCI as shown in the bottom of Figure 10. The PUCCH resource set to be used for 'A-CSI PUCCH Resource indicator' field may contain PUCCH formats that are suitable for carrying CSI report such as PUCCH formats 2, 3, or 4.

In another example embodiment, PUCCH Resource Indicator for HARQ feedback indicated by Msg4 DCI as shown in the bottom of Figure 10 is also used for A-CSI on PUCCH. In this case, the 3 bit "*PUCCH resource indicator"* field in DCI 1-0 with CRC scrambled by TC-RNTI is used to indicate the PUCCH resources for both HARQ feedback and A-CSI. In some embodiments, the PUCCH resources to be used for HARQ feedback and A-CSI may be different. These PUCCH resources may belong to different PUCCH resource sets predefined/specified in 3GPP specifications.

In another example embodiment, the timing for the A-CSI on PUCCH provided may be defined with respect to the PDSCH that carries the *fallbackRAR.* That is, the slot in which the A-CSI on PUCCH is to be transmitted is determined as $n+k'+\Delta$, where $n$ is the slot in which the PDSCH carrying the *fallbackRAR* is received, $k'$ is the timing offset indicated by the 'A-CSI report timing indicator' field in *fallbackRAR,* and $\Delta$ is an additional offset that depends on the subcarrier spacing used for PUCCH transmission.

In another example embodiment, the timing for the A-CSI on PUCCH provided may be defined with respect to the PUCCH that carries the HARQ transmission. That is, the slot in which the A-CSI on PUCCH is to be transmitted is determined as $n'+k'$, where $n$ is the slot in which the HARQ is transmitted on PUCCH, and $k'$ is the timing offset indicated by the 'A-CSI report timing indicator' field in *fallbackRAR.*

In another example embodiment, the timing indication of the PUCCH for A-CSI report can be relative to the PUCCH (for HARQ feedback) scheduled by *successRAR* or the PUSCH (for Msg3 transmission) scheduled by *fallbackRAR.*

In another example embodiment, the timing indication in *fallbackRAR* or Msg2 RAR for the PUCCH for A-CSI report can be relative to the Msg4 PDSCH. With this method, the dedicated PUCCH resource may also be available after Msg4 for initial random access.

Note that the example embodiments related to *fallbackRAR* above are also applicable to the case of Msg2 RAR of 4-step RA. In this case, the 'A-CSI PUCCH Resource Indicator' and/or 'A-CSI Report Timing Indicator' fields may be added to the Msg2 RAR of 4-step RA similar to the example shown in Figure 12.

Embodiment 2: Timing of Aperiodic CSI report depends on the PUCCH repetitions.

In this embodiment, the PUCCH for A-CSI report can be on some of the PUCCH repetitions triggered for HARQ ACK/NACK transmissions. For instance, if PUCCH transmissions are to be repeated, then a subset of the PUCCH resources allocated for the repetitions may be allocated to A-CSI on PUCCH while some other subset of the PUCCH resources allocated for the repetitions may be allocated to HARQ feedback. The PUCCH repetitions allocated for A-CSI may utilize different PUCCH format from the PUCCH repetitions allocated for HARQ feedback.

In one embodiment, the PUCCH resource and the repetition (e.g., the number of repetitions) are triggered in downlink DCI or success RAR, and at least part of the PUCCH repetitions are used only for A-CSI transmission. Which repetitions are used by A-CSI can be determined by one or more of the following ways:

- A predetermined number of repetitions are used for A-CSI, e.g., the first half number of PUCCH repetitions are used for ACK/NACK while the $2^{nd}$ half are used for A-CSI
- The odd PUCCH transmission occasions may be allocated to HARQ feedback while the even PUCCH transmission occasions may be allocated to A-CSI on PUCCH.
- The start PUCCH repetition and/or the number of PUCCH repetitions used for A-CSI transmission can be signaled in downlink DCI

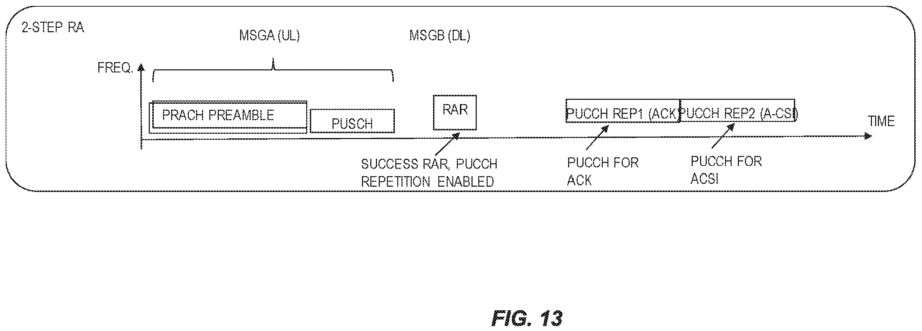

In one example, the PUCCH scheduled in success RAR for MsgB HARQ feedback can be enabled to be repeated twice, and the 1st PUCCH is for ACK transmission for example with PUCCH format0, the 2nd repetition is for A-CSI transmission for example with PUCCH format2. Figure 13 illustrates an A-CSI report on PUCCH allocated in fallbackRAR, according to some embodiments of the present disclosure.

In one embodiment, if the number of repetitions is no more than a threshold value, the A-CSI will not be transmitted/triggered on PUCCH.

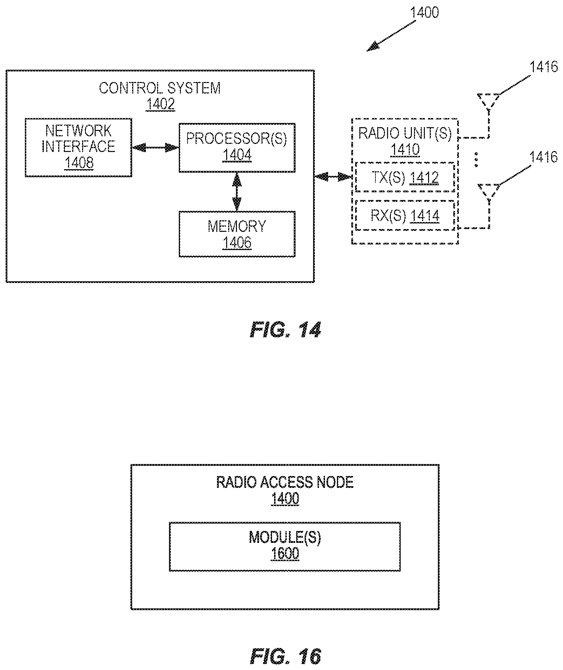

Figure 14 is a schematic block diagram of a radio access node 1400 according to some embodiments of the present disclosure. Optional features are represented by dashed boxes. The radio access node 1400 may be, for example, a base station 702 or 706 or a network node that implements all or part of the functionality of the base station 702 or gNB described herein. As illustrated, the radio access node 1400 includes a control system 1402 that includes one or more processors 1404 (e.g., Central Processing Units (CPUs), Application Specific Integrated Circuits (ASICs), Field Programmable Gate Arrays (FPGAs), and/or the like), memory 1406, and a network interface 1408. The one or more processors 1404 are also referred to herein as processing circuitry. In addition, the radio access node 1400 may include one or more radio units 1410 that each includes one or more transmitters 1412 and one or more receivers 1414 coupled to one or more antennas 1416. The radio units 1410 may be referred to or be part of radio interface circuitry. In some embodiments, the radio unit(s) 1410 is external to the control system 1402 and connected to the control system 1402 via, e.g., a wired connection (e.g., an optical cable). However, in some other embodiments, the radio unit(s) 1410 and potentially the antenna(s) 1416 are integrated together with the control system 1402. The one or more processors 1404 operate to provide one or more functions of a radio access node 1400 as described herein. In some embodiments, the function(s) are implemented in software that is stored, e.g., in the memory 1406 and executed by the one or more processors 1404.

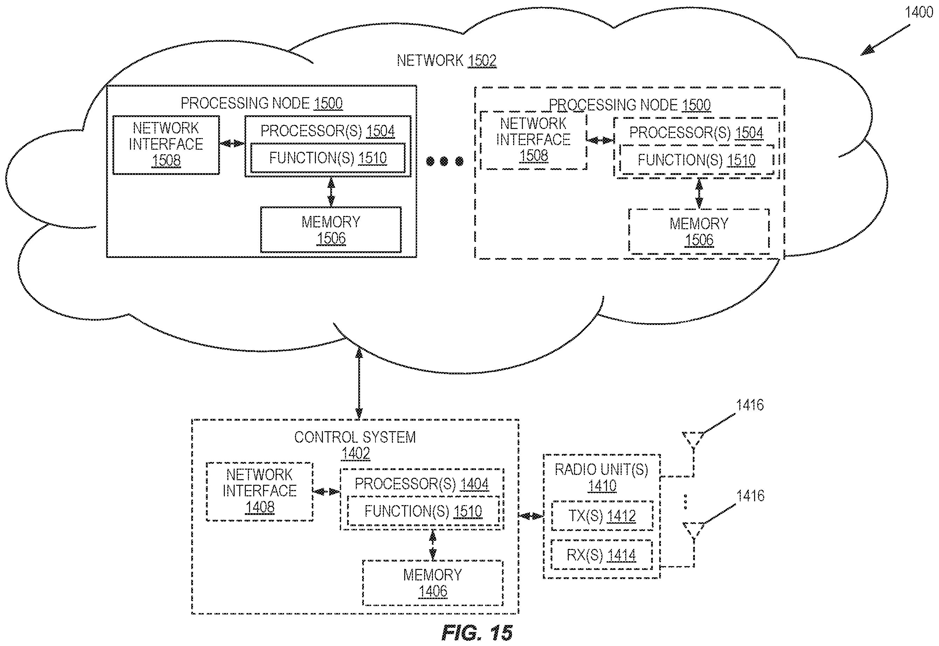

Figure 15 is a schematic block diagram that illustrates a virtualized embodiment of the radio access node 1400 according to some embodiments of the present disclosure. This discussion is equally applicable to other types of network nodes. Further, other types of network nodes may have similar virtualized architectures. Again, optional features are represented by dashed boxes.

As used herein, a "virtualized" radio access node is an implementation of the radio access node 1400 in which at least a portion of the functionality of the radio access node 1400 is implemented as a virtual component(s) (e.g., via a virtual machine(s) executing on a physical processing node(s) in a network(s)). As illustrated, in this example, the radio access node 1400 may include the control system 1402 and/or the one or more radio units 1410, as described above. The control system 1402 may be connected to the radio unit(s) 1410 via, for example, an optical cable or the like. The radio access node 1400 includes one or more processing nodes 1500 coupled to or included as part of a network(s) 1502. If present, the control system 1402 or the radio unit(s) are connected to the processing node(s) 1500 via the network 1502. Each processing node 1500 includes one or more processors 1504 (e.g., CPUs, ASICs, FPGAs, and/or the like), memory 1506, and a network interface 1508.

In this example, functions 1510 of the radio access node 1400 described herein are implemented at the one or more processing nodes 1500 or distributed across the one or more processing nodes 1500 and the control system 1402 and/or the radio unit(s) 1410 in any desired manner. In some particular embodiments, some or all of the functions 1510 of the radio access node 1400 described herein are implemented as virtual components executed by one or more virtual machines implemented in a virtual environment(s) hosted by the processing node(s) 1500. As will be appreciated by one of ordinary skill in the art, additional signaling or communication between the processing node(s) 1500 and the control system 1402 is used in order to carry out at least some of the desired functions 1510. Notably, in some embodiments, the control system 1402 may not be included, in which case the radio unit(s) 1410 communicate directly with the processing node(s) 1500 via an appropriate network interface(s).

In some embodiments, a computer program including instructions which, when executed by at least one processor, causes the at least one processor to carry out the functionality of radio access node 1400 or a node (e.g., a processing node 1500) implementing one or more of the functions 1510 of the radio access node 1400 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 16 is a schematic block diagram of the radio access node 1400 according to some other embodiments of the present disclosure. The radio access node 1400 includes one or more modules 1600, each of which is implemented in software. The module(s) 1600 provide the functionality of the radio access node 1400 described herein. This discussion is equally applicable to the processing node 1500 of Figure 15 where the modules 1600 may be implemented at one of the processing nodes 1500 or distributed across multiple processing nodes 1500 and/or distributed across the processing node(s) 1500 and the control system 1402.

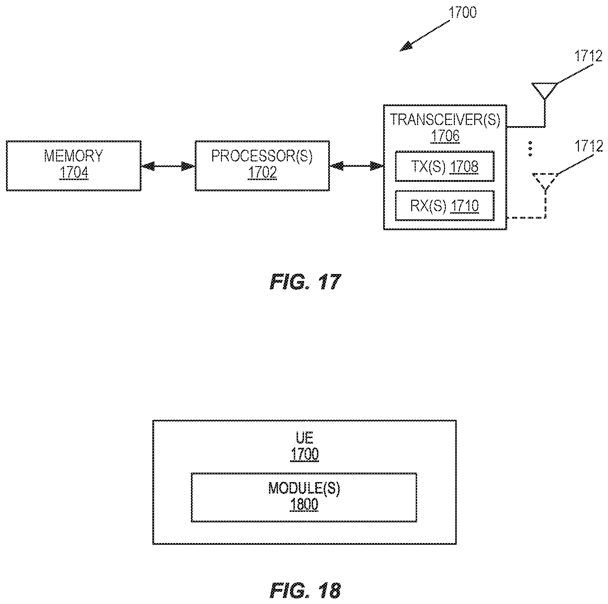

Figure 17 is a schematic block diagram of a wireless communication device 1700 according to some embodiments of the present disclosure. As illustrated, the wireless communication device 1700 includes one or more processors 1702 (e.g., CPUs, ASICs, FPGAs, and/or the like), memory 1704, and one or more transceivers 1706 each including one or more transmitters 1708 and one or more receivers 1710 coupled to one or more antennas 1712. The transceiver(s) 1706 includes radio-front end circuitry connected to the antenna(s) 1712 that is configured to condition signals communicated between the antenna(s) 1712 and the processor(s) 1702, as will be appreciated by on of ordinary skill in the art. The processors 1702 are also referred to herein as processing circuitry. The transceivers 1706 are also referred to herein as radio circuitry. In some embodiments, the functionality of the wireless communication device 1700 described above may be fully or partially implemented in software that is, e.g., stored in the memory 1704 and executed by the processor(s) 1702. Note that the wireless communication device 1700 may include additional components not illustrated in Figure 17 such as, e.g., one or more user interface components (e.g., an input/output interface including a display, buttons, a touch screen, a microphone, a speaker(s), and/or the like and/or any other components for allowing input of information into the wireless communication device 1700 and/or allowing output of information from the wireless communication device 1700), a power supply (e.g., a battery and associated power circuitry), etc.

In some embodiments, a computer program including instructions which, when executed by at least one processor, causes the at least one processor to carry out the functionality of the wireless communication device 1700 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 18 is a schematic block diagram of the wireless communication device 1700 according to some other embodiments of the present disclosure. The wireless communication device 1700 includes one or more modules 1800, each of which is implemented in software. The module(s) 1800 provide the functionality of the wireless communication device 1700 described herein.

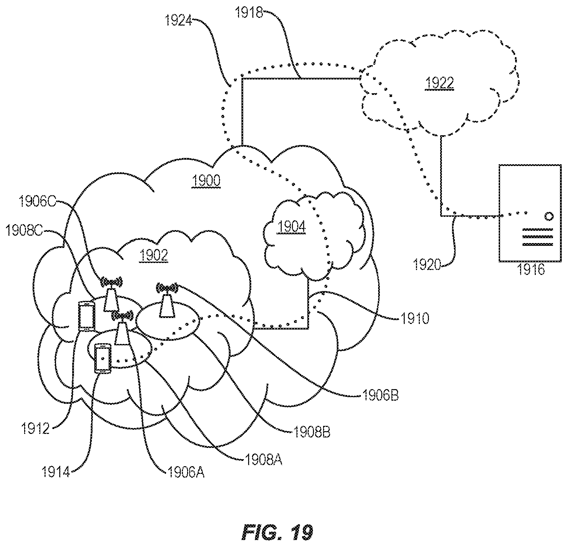

With reference to Figure 19, in accordance with an embodiment, a communication system includes a telecommunication network 1900, such as a 3GPP-type cellular network, which comprises an access network 1902, such as a RAN, and a core network 1904. The access network 1902 comprises a plurality of base stations 1906A, 1906B, 1906C, such as Node Bs, eNBs, gNBs, or other types of wireless Access Points (APs), each defining a corresponding coverage area 1908A, 1908B, 1908C. Each base station 1906A, 1906B, 1906C is connectable to the core network 1904 over a wired or wireless connection 1910. A first UE 1912 located in coverage area 1908C is configured to wirelessly connect to, or be paged by, the corresponding base station 1906C. A second UE 1914 in coverage area 1908A is wirelessly connectable to the corresponding base station 1906A. While a plurality of UEs 1912, 1914 are illustrated in this example, the disclosed embodiments are equally applicable to a situation where a sole UE is in the coverage area or where a sole UE is connecting to the corresponding base station 1906.

The telecommunication network 1900 is itself connected to a host computer 1916, which may be embodied in the hardware and/or software of a standalone server, a cloud-implemented server, a distributed server, or as processing resources in a server farm. The host computer 1916 may be under the ownership or control of a service provider, or may be operated by the service provider or on behalf of the service provider. Connections 1918 and 1920 between the telecommunication network 1900 and the host computer 1916 may extend directly from the core network 1904 to the host computer 1916 or may go via an optional intermediate network 1922. The intermediate network 1922 may be one of, or a combination of more than one of, a public, private, or hosted network; the intermediate network 1922, if any, may be a backbone network or the Internet; in particular, the intermediate network 1922 may comprise two or more sub-networks (not shown).

The communication system of Figure 19 as a whole enables connectivity between the connected UEs 1912, 1914 and the host computer 1916. The connectivity may be described as an Over-the-Top (OTT) connection 1924. The host computer 1916 and the connected UEs 1912, 1914 are configured to communicate data and/or signaling via the OTT connection 1924, using the access network 1902, the core network 1904, any intermediate network 1922, and possible further infrastructure (not shown) as intermediaries. The OTT connection 1924 may be transparent in the sense that the participating communication devices through which the OTT connection 1924 passes are unaware of routing of uplink and downlink communications. For example, the base station 1906 may not or need not be informed about the past routing of an incoming downlink communication with data originating from the host computer 1916 to be forwarded (e.g., handed over) to a connected UE 1912. Similarly, the base station 1906 need not be aware of the future routing of an outgoing uplink communication originating from the UE 1912 towards the host computer 1916.

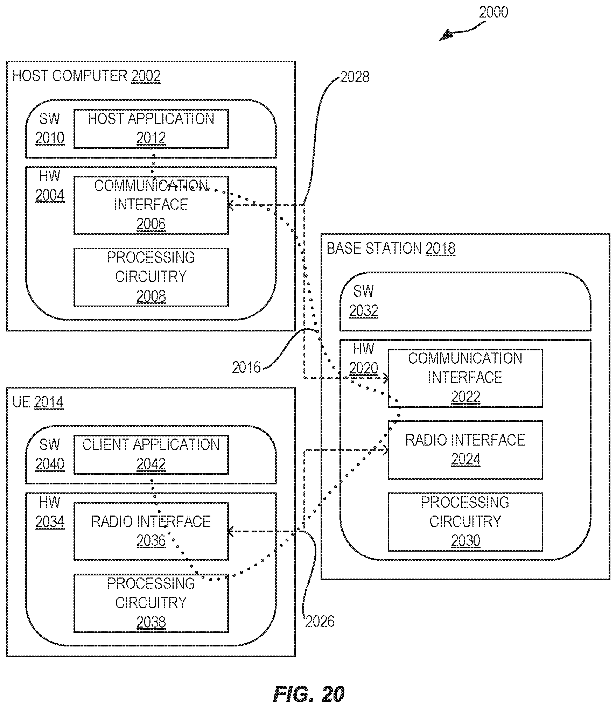

Example implementations, in accordance with an embodiment, of the UE, base station, and host computer discussed in the preceding paragraphs will now be described with reference to Figure 20. In a communication system 2000, a host computer 2002 comprises hardware 2004 including a communication interface 2006 configured to set up and maintain a wired or wireless connection with an interface of a different communication device of the communication system 2000. The host computer 2002 further comprises processing circuitry 2008, which may have storage and/or processing capabilities. In particular, the processing circuitry 2008 may comprise one or more programmable processors, ASICs, FPGAs, or combinations of these (not shown) adapted to execute instructions. The host computer 2002 further comprises software 2010, which is stored in or accessible by the host computer 2002 and executable by the processing circuitry 2008. The software 2010 includes a host application 2012. The host application 2012 may be operable to provide a service to a remote user, such as a UE 2014 connecting via an OTT connection 2016 terminating at the UE 2014 and the host computer 2002. In providing the service to the remote user, the host application 2012 may provide user data which is transmitted using the OTT connection 2016.

The communication system 2000 further includes a base station 2018 provided in a telecommunication system and comprising hardware 2020 enabling it to communicate with the host computer 2002 and with the UE 2014. The hardware 2020 may include a communication interface 2022 for setting up and maintaining a wired or wireless connection with an interface of a different communication device of the communication system 2000, as well as a radio interface 2024 for setting up and maintaining at least a wireless connection 2026 with the UE 2014 located in a coverage area (not shown in Figure 20) served by the base station 2018. The communication interface 2022 may be configured to facilitate a connection 2028 to the host computer 2002. The connection 2028 may be direct or it may pass through a core network (not shown in Figure 20) of the telecommunication system and/or through one or more intermediate networks outside the telecommunication system. In the embodiment shown, the hardware 2020 of the base station 2018 further includes processing circuitry 2030, which may comprise one or more programmable processors, ASICs, FPGAs, or combinations of these (not shown) adapted to execute instructions. The base station 2018 further has software 2032 stored internally or accessible via an external connection.

The communication system 2000 further includes the UE 2014 already referred to. The UE's 2014 hardware 2034 may include a radio interface 2036 configured to set up and maintain a wireless connection 2026 with a base station serving a coverage area in which the UE 2014 is currently located. The hardware 2034 of the UE 2014 further includes processing circuitry 2038, which may comprise one or more programmable processors, ASICs, FPGAs, or combinations of these (not shown) adapted to execute instructions. The UE 2014 further comprises software 2040, which is stored in or accessible by the UE 2014 and executable by the processing circuitry 2038. The software 2040 includes a client application 2042. The client application 2042 may be operable to provide a service to a human or non-human user via the UE 2014, with the support of the host computer 2002. In the host computer 2002, the executing host application 2012 may communicate with the executing client application 2042 via the OTT connection 2016 terminating at the UE 2014 and the host computer 2002. In providing the service to the user, the client application 2042 may receive request data from the host application 2012 and provide user data in response to the request data. The OTT connection 2016 may transfer both the request data and the user data. The client application 2042 may interact with the user to generate the user data that it provides.

It is noted that the host computer 2002, the base station 2018, and the UE 2014 illustrated in Figure 20 may be similar or identical to the host computer 1916, one of the base stations 1906A, 1906B, 1906C, and one of the UEs 1912, 1914 of Figure 19, respectively. This is to say, the inner workings of these entities may be as shown in Figure 20 and independently, the surrounding network topology may be that of Figure 19.

In Figure 20, the OTT connection 2016 has been drawn abstractly to illustrate the communication between the host computer 2002 and the UE 2014 via the base station 2018 without explicit reference to any intermediary devices and the precise routing of messages via these devices. The network infrastructure may determine the routing, which may be configured to hide from the UE 2014 or from the service provider operating the host computer 2002, or both. While the OTT connection 2016 is active, the network infrastructure may further take decisions by which it dynamically changes the routing (e.g., on the basis of load balancing consideration or reconfiguration of the network).

The wireless connection 2026 between the UE 2014 and the base station 2018 is in accordance with the teachings of the embodiments described throughout this disclosure. One or more of the various embodiments improve the performance of OTT services provided to the UE 2014 using the OTT connection 2016, in which the wireless connection 2026 forms the last segment. More precisely, the teachings of these embodiments may improve the e.g., data rate, latency, power consumption, etc. and thereby provide benefits such as e.g., reduced user waiting time, relaxed restriction on file size, better responsiveness, extended battery lifetime, etc.

A measurement procedure may be provided for the purpose of monitoring data rate, latency, and other factors on which the one or more embodiments improve. There may further be an optional network functionality for reconfiguring the OTT connection 2016 between the host computer 2002 and the UE 2014, in response to variations in the measurement results. The measurement procedure and/or the network functionality for reconfiguring the OTT connection 2016 may be implemented in the software 2010 and the hardware 2004 of the host computer 2002 or in the software 2040 and the hardware 2034 of the UE 2014, or both. In some embodiments, sensors (not shown) may be deployed in or in association with communication devices through which the OTT connection 2016 passes; the sensors may participate in the measurement procedure by supplying values of the monitored quantities exemplified above, or supplying values of other physical quantities from which the software 2010, 2040 may compute or estimate the monitored quantities. The reconfiguring of the OTT connection 2016 may include message format, retransmission settings, preferred routing, etc.; the reconfiguring need not affect the base station 2018, and it may be unknown or imperceptible to the base station 2018. Such procedures and functionalities may be known and practiced in the art. In certain embodiments, measurements may involve proprietary UE signaling facilitating the host computer's 2002 measurements of throughput, propagation times, latency, and the like. The measurements may be implemented in that the software 2010 and 2040 causes messages to be transmitted, in particular empty or 'dummy' messages, using the OTT connection 2016 while it monitors propagation times, errors, etc.

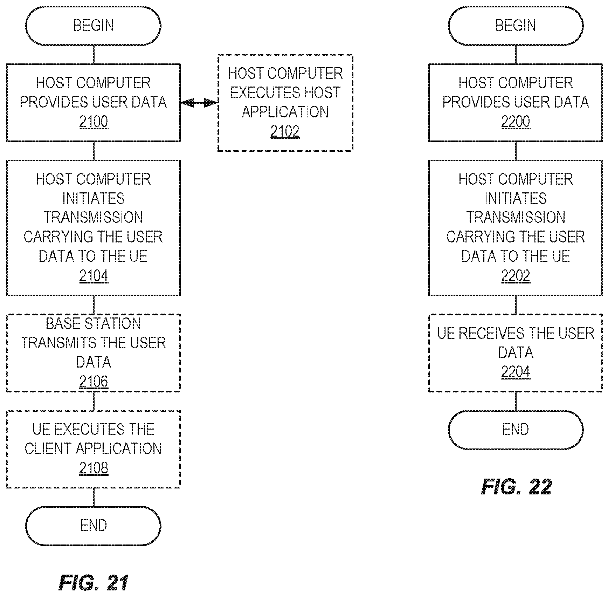

Figure 21 is a flowchart illustrating a method implemented in a communication system, in accordance with one embodiment. The communication system includes a host computer, a base station, and a UE which may be those described with reference to Figures 19 and 20. For simplicity of the present disclosure, only drawing references to Figure 21 will be included in this section. In step 2100, the host computer provides user data. In sub-step 2102 (which may be optional) of step 2100, the host computer provides the user data by executing a host application. In step 2104, the host computer initiates a transmission carrying the user data to the UE. In step 2106 (which may be optional), the base station transmits to the UE the user data which was carried in the transmission that the host computer initiated, in accordance with the teachings of the embodiments described throughout this disclosure. In step 2108 (which may also be optional), the UE executes a client application associated with the host application executed by the host computer.

Figure 22 is a flowchart illustrating a method implemented in a communication system, in accordance with one embodiment. The communication system includes a host computer, a base station, and a UE which may be those described with reference to Figures 19 and 20. For simplicity of the present disclosure, only drawing references to Figure 22 will be included in this section. In step 2200 of the method, the host computer provides user data. In an optional sub-step (not shown) the host computer provides the user data by executing a host application. In step 2202, the host computer initiates a transmission carrying the user data to the UE. The transmission may pass via the base station, in accordance with the teachings of the embodiments described throughout this disclosure. In step 2204 (which may be optional), the UE receives the user data carried in the transmission.

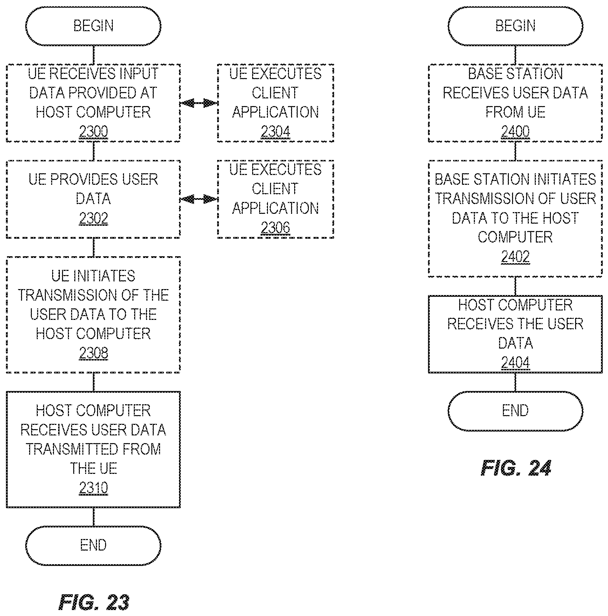

Figure 23 is a flowchart illustrating a method implemented in a communication system, in accordance with one embodiment. The communication system includes a host computer, a base station, and a UE which may be those described with reference to Figures 19 and 20. For simplicity of the present disclosure, only drawing references to Figure 23 will be included in this section. In step 2300 (which may be optional), the UE receives input data provided by the host computer. Additionally or alternatively, in step 2302, the UE provides user data. In sub-step 2304 (which may be optional) of step 2300, the UE provides the user data by executing a client application. In sub-step 2306 (which may be optional) of step 2302, the UE executes a client application which provides the user data in reaction to the received input data provided by the host computer. In providing the user data, the executed client application may further consider user input received from the user. Regardless of the specific manner in which the user data was provided, the UE initiates, in sub-step 2308 (which may be optional), transmission of the user data to the host computer. In step 2310 of the method, the host computer receives the user data transmitted from the UE, in accordance with the teachings of the embodiments described throughout this disclosure.

Figure 24 is a flowchart illustrating a method implemented in a communication system, in accordance with one embodiment. The communication system includes a host computer, a base station, and a UE which may be those described with reference to Figures 19 and 20. For simplicity of the present disclosure, only drawing references to Figure 24 will be included in this section. In step 2400 (which may be optional), in accordance with the teachings of the embodiments described throughout this disclosure, the base station receives user data from the UE. In step 2402 (which may be optional), the base station initiates transmission of the received user data to the host computer. In step 2404 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • ACK | Acknowledgement |
| • A-CSI | Aperiodic Channel State Information |
| • AMF | Access and Mobility Function |
| • AN | Access Network |
| • AP | Access Point |
| • ASIC | Application Specific Integrated Circuit |
| • AUSF | Authentication Server Function |
| • BWP | Bandwidth Part |
| • CA | Carrier Aggregation |
| • CBG | Code Block Group |
| • CCE | Control Channel Element |
| • CP-OFDM | Cyclic Prefix Orthogonal Frequency Division Multiplexing |
| • CPU | Central Processing Unit |
| • CQI | Channel Quality Indication |
| • CRC | Cyclic Redundancy Check |
| • CRI | CSI-RS resource indicator |
| • CSI | Channel State Information |
| • CW | Codeword |
| • DCI | Downlink Control Information |
| • DFT | Discrete Fourier Transform |
| • DL | Downlink |
| • DN | Data Network |
| • DSP | Digital Signal Processor |
| • eNB | Enhanced or Evolved Node B |
| • FH | Frequency Hopping |
| • FPGA | Field Programmable Gate Array |
| • gNB | New Radio Base Station |
| • gNB-DU | New Radio Base Station Distributed Unit |
| • HARQ | Hybrid Automatic Repeat Request |
| • HSS | Home Subscriber Server |
| • IoT | Internet of Things |
| • IP | Internet Protocol |
| • LTE | Long Term Evolution |
| • MIMO | Multiple Input Multiple Output |
| • MME | Mobility Management Entity |
| • MTC | Machine Type Communication |

(continued)

| | |
|---|---|
| • NEF | Network Exposure Function |
| • NF | Network Function |
| • NG-RAN | Next Generation Radio Access Network |
| • NR | New Radio |
| • NRF | Network Function Repository Function |
| • NSSF | Network Slice Selection Function |
| • NZP | Non Zero Power |
| • OFDM | Orthogonal Frequency Division Multiplexing |
| • OTT | Over-the-Top |
| • PC | Personal Computer |
| • PCF | Policy Control Function |
| • PDSCH | Physical Downlink Shared Channel |
| • P-GW | Packet Data Network Gateway |
| • PMI | Precoding Matrix Indicator |
| • PRACH | Physical Random Access Channel |
| • PRB | Physical Resource Block |
| • PRI | PUCCH Resource Indicator |
| • PUCCH | Physical Uplink Control Channel |
| • PUSCH | Physical Uplink Shared Channel |
| • RAM | Random Access Memory |
| • RAN | Radio Access Network |
| • RAR | Random Access Response |
| • RB | Resource Block |
| • RE | Resource Element |
| • RI | Rank Indicator |
| • ROM | Read Only Memory |
| • RRC | Radio Resource Control |
| • RRH | Remote Radio Head |
| • RTT | Round Trip Time |
| • SCEF | Service Capability Exposure Function |
| • SMF | Session Management Function |
| • SR | Scheduling Request |
| • TB | Transport Block |
| • TC-RNTI | Temporary Cell Radio Network Temporary Identifier |
| • TCI | Transmission Configuration Indicator |
| • TDD | Time Division Duplexing |
| • TRP | Transmission/Reception Point |
| • UCI | UL Control Information |
| • UDM | Unified Data Management |
| • UE | User Equipment |
| • UL | Uplink |
| • UPF | User Plane Function |
| • URLLC | Ultra Reliable Low Latency Communication |

Those skilled in the art will recognize improvements and modifications to the embodiments of the present disclosure. All such improvements and modifications are considered within the scope of the appended claims.

**Claims**

1. A method performed by a wireless device for reporting Channel State Information, CSI, the method comprising:

determining (800) at least one of: a timing offset for an aperiodic CSI on a Physical Uplink Control Channel, PUCCH; and a PUCCH resource to be used for the aperiodic CSI; and

reporting (802), during a random access procedure, the aperiodic CSI on the PUCCH according to the at least one of the timing offset for the aperiodic CSI on PUCCH and the PUCCH resource to be used for the aperiodic CSI, wherein determining the at least one of the timing offset for the aperiodic CSI on the PUCCH and the PUCCH resource to be used for the aperiodic CSI comprises:

receiving the at least one of the timing offset for the aperiodic CSI on the PUCCH and the PUCCH resource to be used for the aperiodic CSI as part of a Random Access Response, RAR, which may include one or more of:

message 2 of a 4-step random access procedure;
successRAR of a 2-step random access procedure; and
fallbackRAR when the wireless device falls back from the 2-step random access procedure to the 4-step random access procedure, and

where the PUCCH resource indicated is from a PUCCH resource set that is different from a PUCCH resource set used for Hybrid Automatic Repeat Request, HARQ, feedback indicated by a 'PUCCH resource indicator' field in Downlink Control Information, DCI, 1-0 with a Cyclic Redundancy Check, CRC, scrambled by a Temporary Cell Radio Network Temporary Identifier, TC-RNTI.

2. A method performed by a base station for receiving Channel State Information, CSI, the method comprising:

indicating (900) at least one of a timing offset for an aperiodic CSI on a Physical Uplink Control Channel, PUCCH, and a PUCCH resource to be used for the aperiodic CSI; and

receiving (802), during a random access procedure, an aperiodic CSI report on the PUCCH according to the at least one of the timing offset for the aperiodic CSI on PUCCH and the PUCCH resource to be used for the aperiodic CSI,

wherein indicating the at least one of the timing offset for the aperiodic CSI on the PUCCH and the PUCCH resource to be used for the aperiodic CSI comprises:

indicating the at least one of the timing offset for the aperiodic CSI on the PUCCH and the PUCCH resource to be used for the aperiodic CSI as part of a Random Access Response, RAR, which may include one or more of:

message 2 of a 4-step random access procedure;
successRAR of a 2-step random access procedure; and
fallbackRAR when the wireless device falls back from the 2-step

random access procedure to the 4-step random access procedure, where the PUCCH resource indicated is from a PUCCH resource set that is different from a PUCCH resource set used for Hybrid Automatic Repeat Request, HARQ, feedback indicated by a 'PUCCH resource indicator' field in Downlink Control Information, DCI, 1-0 with a Cyclic Redundancy Check, CRC, scrambled by a Temporary Cell Radio Network Temporary Identifier, TC-RNTI.

3. The method of claim 1 or 2 where an "Aperiodic CSI, A-CSI, PUCCH Resource Indicator" field in the *successRAR* provides an indication of the PUCCH resource to be used for an A-CSI transmission on the PUCCH; and, optionally,

where the PUCCH resource indicated is from a PUCCH resource set that is different from a PUCCH resource set used for Hybrid Automatic Repeat Request, HARQ, feedback indicated by a 'PUCCH Resource Indicator' field in the *successRAR* and/or
where the PUCCH resource set to be used for the A-CSI on the PUCCH may contain one of PUCCH formats 2, 3, or 4.

4. The method of claim 1 or 2 where an 'A-CSI report timing indicator' in the *successRAR* provides a timing for an A-CSI report on the PUCCH.

5. The method of claim 4 where the timing for the A-CSI report on the PUCCH provided may be defined with respect to a Physical Downlink Shared Channel, PDSCH, that carries the *successRAR* or
where the timing for the A-CSI on the PUCCH provided may be defined with respect to the PUCCH that carries a HARQ transmission.

6. The method of claim 1 or 2 where an "Aperiodic CSI, A-CSI, PUCCH Resource Indicator" field in the *fallbackRAR* provides an indication of the PUCCH resource to be used for an A-CSI transmission on the PUCCH.

7. The method of claim 6 where the PUCCH resource set to be used for the A-CSI on the PUCCH may contain one of PUCCH formats 2, 3, or 4.

8. The method of claim 1 or 2 where an 'Aperiodic CSI, A-CSI, report timing indicator' in the *fallbackRAR'* provides a timing for an A-CSI report on the PUCCH.

9. The method of claim 8 where the timing for the A-CSI on the PUCCH provided may be defined with respect to a Physical Downlink Shared Channel, PDSCH, that carries the *fallbackRAR* or
where the timing for the A-CSI on the PUCCH provided may be defined with respect to the PUCCH that carries a Hybrid Automatic Repeat Request, HARQ, transmission.

10. The method of claim 1 or 2 where an "Aperiodic CSI, A-CSI, PUCCH Resource Indicator" field in a message 2 RAR of the 4-step random access procedure provides an indication of the PUCCH resource to be used for an A-CSI transmission on the PUCCH; and, optionally,
where the PUCCH resource indicated is from a PUCCH resource set that is different from the PUCCH resource set used for Hybrid Automatic Repeat Request, HARQ, feedback indicated by the 'PUCCH resource indicator' field in a Downlink Control Information, DCI, 1-0 with a Cyclic Redundancy Check, CRC, scrambled by a Temporary Cell Radio Network Temporary Identifier, TC-RNTI.

11. The method of claim 10 where the PUCCH resource set to be used for the A-CSI on the PUCCH may contain one of the PUCCH formats 2, 3, or 4.

12. The method of claim 1 or 2 where an 'Aperiodic CSI, A-CSI, report timing indicator' in message 2 RAR of the 4-step random access procedure provides a timing for an A-CSI report on the PUCCH.

13. The method of claim 12 where the timing for the A-CSI on the PUCCH provided may be defined with respect to a Physical Downlink Shared Channel, PDSCH, that carries the message 2 RAR of the 4-step random access procedure or
where the timing for the A-CSI on the PUCCH provided may be defined with respect to the PUCCH that carries a Hybrid Automatic Repeat Request, HARQ, transmission.

14. A wireless device (1700) for reporting Channel State Information, CSI, during a random access procedure, the wireless device (1700) comprising:
one or more processors (1702); and
memory (1704) storing instructions executable by the one or more processors, whereby the wireless device (1700) is operable to perform the method according to claim 1 or of any one of claims 3 to 13 depending on claim 1.

15. A base station (1400) for receiving Channel State Information, CSI, during a random access procedure, the base station (1400) comprising:
one or more processors (1404); and
memory (1406) comprising instructions to cause the base station (1400) to perform the method of claim 2 or of any one of claims 3 to 13 depending on claim 2.

**Patentansprüche**

1. Verfahren, das von einer drahtlosen Vorrichtung durchgeführt wird, zum Melden von Kanalzustandsinformationen, CSI, wobei das Verfahren Folgendes umfasst:

Bestimmen (800) mindestens eines von Folgendem: einen Zeitversatz für aperiodische CSI auf einem Physical Uplink Control Channel, PUCCH; und eine PUCCH-Ressource, die für die aperiodischen CSI verwendet werden soll; und
Melden (802) der aperiodischen CSI auf dem PUCCH gemäß dem mindestens einen von dem Zeitversatz für die aperiodischen CSI auf dem PUCCH und der für die aperiodischen CSI zu verwendenden PUCCH-Ressource während einer Direktzugriffsprozedur,

wobei das Bestimmen mindestens eines von dem Zeitversatz für die aperiodischen CSI auf dem PUCCH und der für die aperiodischen CSI zu verwendenden PUCCH-Ressource Folgendes umfasst:

Empfangen des mindestens einen von dem Zeitversatz für die aperiodischen CSI auf dem PUCCH und der für die aperiodischen CSI zu verwendenden PUCCH-Ressource als Teil einer Direktzugriffsantwort, RAR, die eines oder mehrere von Folgenden umfassen kann:

eine Nachricht 2 einer 4-stufigen Direktzugriffsprozedur;
eine successRAR einer 2-stufigen Direktzugriffsprozedur; und
eine fallbackRAR, wenn die drahtlose Vorrichtung von der 2-stufigen Direktzugriffsprozedur auf die 4-stufigen Direktzugriffsprozedur zurückfällt, und

wobei die angezeigte PUCCH-Ressource aus einem PUCCH-Ressourcensatz ist, der sich von einem PUCCH-Ressourcensatz unterscheidet, der für Hybrid Automatic Repeat Request-Rückmeldung, HARQ-Rückmeldung, verwendet wird, was durch ein 'PUCCH-Ressourcenindikator'-Feld in Downlink-Steuerinformationen, DCI, 1-0 mit einer zyklischen Redundanzprüfung, CRC, verwürfelt durch eine temporäre Zellenfunknetzwerkkennung, TC-RNTI, angezeigt wird.

**2.** Verfahren, das von einer Basisstation durchgeführt wird, zum Empfangen von Kanalzustandsinformationen, CSI, wobei das Verfahren Folgendes umfasst:

Anzeigen (900) mindestens eines von einem Zeitversatz für aperiodische CSI auf einem Physical Uplink Control Channel, PUCCH, und einer PUCCH-Ressource, die für die aperiodischen CSI verwendet werden soll; und Empfangen (802) einer Meldung der aperiodischen CSI auf dem PUCCH gemäß dem mindestens einen von dem Zeitversatz für die aperiodischen CSI auf dem PUCCH und der für die aperiodischen CSI zu verwendenden PUCCH-Ressource während einer Direktzugriffsprozedur,

wobei das Anzeigen mindestens eines von dem Zeitversatz für die aperiodischen CSI auf dem PUCCH und der für die aperiodischen CSI zu verwendenden PUCCH-Ressource Folgendes umfasst:

Anzeigen des mindestens einen von dem Zeitversatz für die aperiodischen CSI auf dem PUCCH und der für die aperiodischen CSI zu verwendenden PUCCH-Ressource als Teil einer Direktzugriffsantwort, RAR, die eines oder mehrere von Folgenden umfassen kann:

eine Nachricht 2 einer 4-stufigen Direktzugriffsprozedur;
eine successRAR einer 2-stufigen Direktzugriffsprozedur; und
eine fallbackRAR, wenn die drahtlose Vorrichtung von der 2-stufigen Direktzugriffsprozedur auf die 4-stufigen Direktzugriffsprozedur zurückfällt,

wobei die angezeigte PUCCH-Ressource aus einem PUCCH-Ressourcensatz ist, der sich von einem PUCCH-Ressourcensatz unterscheidet, der für Hybrid Automatic Repeat Request-Rückmeldung, HARQ-Rückmeldung, verwendet wird, was durch ein 'PUCCH-Ressourcenindikator'-Feld in Downlink-Steuerinformationen, DCI, 1-0 mit einer zyklischen Redundanzprüfung, CRC, verwürfelt durch eine temporäre Zellenfunknetzwerkkennung, TC-RNTI, angezeigt wird.

**3.** Verfahren nach Anspruch 1 oder 2, wobei ein "Aperiodische CSI, A-CSI, PUCCH-Ressourcenindikator"-Feld in der successRAR eine Anzeige der PUCCH-Ressource bereitstellt, die für eine A-CSI-Übertragung auf dem PUCCH verwendet werden soll; und optional

wobei die angezeigte PUCCH-Ressource aus einem PUCCH-Ressourcensatz ist, der sich von einem PUCCH-Ressourcensatz unterscheidet, der für Hybrid Automatic Repeat Request-Rückmeldung, HARQ-Rückmeldung, verwendet wird, was durch ein 'PUCCH-Ressourcenindikator'-Feld in der successRAR angezeigt wird, und/oder wobei der PUCCH-Ressourcensatz, der für die A-CSI auf dem PUCCH verwendet werden soll, eines der PUCCH-Formate 2, 3 oder 4 enthalten kann.

**4.** Verfahren nach Anspruch 1 oder 2, wobei ein 'A-CSI-Meldezeitindikator' in der successRAR einen Zeitpunkt für eine A-CSI-Meldung auf dem PUCCH bereitstellt.

5. Verfahren nach Anspruch 4, wobei der bereitgestellte Zeitpunkt für die A-CSI-Meldung auf dem PUCCH in Bezug auf einen Physical Downlink Shared Channel, PDSCH, definiert sein kann, der die successRAR übermittelt, oder wobei der bereitgestellte Zeitpunkt für die A-CSI auf dem PUCCH in Bezug auf den PUCCH definiert sein kann, der eine HARQ-Übertragung übermittelt.

6. Verfahren nach Anspruch 1 oder 2, wobei ein "Aperiodische CSI, A-CSI, PUCCH-Ressourcenindikator"-Feld in der fallbackRAR eine Anzeige einer PUCCH-Ressource bereitstellt, die für eine A-CSI-Übertragung auf dem PUCCH verwendet werden soll.

7. Verfahren nach Anspruch 6, wobei der PUCCH-Ressourcensatz, der für die A-CSI auf dem PUCCH verwendet wird, eines der PUCCH-Formate 2, 3 oder 4 enthalten kann.

8. Verfahren nach Anspruch 1 oder 2, wobei ein 'Aperiodische CSI, A-CSI, Meldezeitindikator' in der fallbackRAR einen Zeitpunkt für eine A-CSI-Meldung auf dem PUCCH bereitstellt.

9. Verfahren nach Anspruch 8, wobei der bereitgestellte Zeitpunkt für die A-CSI auf dem PUCCH in Bezug auf einen Physical Downlink Shared Channel, PDSCH, definiert sein kann, der die fallbackRAR übermittelt, oder wobei der bereitgestellte Zeitpunkt für die A-CSI auf dem PUCCH in Bezug auf den PUCCH definiert sein kann, der eine Hybrid Automatic Repeat Request-Übertragung, HARQ-Übertragung, übermittelt.

10. Verfahren nach Anspruch 1 oder 2, wobei ein "Aperiodische CSI, A-CSI, PUCCH-Ressourcenindikator"-Feld in einer Nachricht-2-RAR der 4-stufigen Direktzugriffsprozedur eine Anzeige der PUCCH-Ressource bereitstellt, die für eine A-CSI-Übertragung auf dem PUCCH verwendet werden soll; und optional wobei die angezeigte PUCCH-Ressource aus einem PUCCH-Ressourcensatz ist, der sich von dem PUCCH-Ressourcensatz unterscheidet, der für Hybrid Automatic Repeat Request-Rückmeldung, HARQ-Rückmeldung, verwendet wird, was durch das 'PUCCH-Ressourcenindikator'-Feld in Downlink-Steuerinformationen, DCI, 1-0 mit einer zyklischen Redundanzprüfung, CRC, verwürfelt durch eine temporäre Zellenfunknetzwerkkennung, TC-RNTI, angezeigt wird.

11. Verfahren nach Anspruch 10, wobei der PUCCH-Ressourcensatz, der für die A-CSI auf dem PUCCH verwendet werden soll, eines der PUCCH-Formate 2, 3 oder 4 enthalten kann.

12. Verfahren nach Anspruch 1 oder 2, wobei ein 'Aperiodische CSI, A-CSI, Meldezeitindikator' in einer Nachricht-2-RAR der 4-stufigen Direktzugriffsprozedur einen Zeitpunkt für eine A-CSI-Meldung auf dem PUCCH bereitstellt.

13. Verfahren nach Anspruch 12, wobei der bereitgestellte Zeitpunkt für die A-CSI auf dem PUCCH in Bezug auf einen Physical Downlink Shared Channel, PDSCH, definiert sein kann, der die Nachricht-2-RAR der 4-stufigen Direktzugriffsprozedur übermittelt, oder wobei der Zeitpunkt für die A-CSI auf dem bereitgestellten PUCCH in Bezug auf den PUCCH definiert sein kann, der eine Hybrid Automatic Repeat Request-Übertragung, HARQ-Übertragung, übermittelt.

14. Drahtlose Vorrichtung (1700) zum Melden von Kanalzustandsinformationen, CSI, während einer Direktzugriffsprozedur, wobei die drahtlose Vorrichtung (1700) Folgendes umfasst:

   einen oder mehrere Prozessoren (1702); und
   Speicher (1704), der Anweisungen speichert, die von dem einen oder den mehreren Prozessoren ausgeführt werden können, wodurch die drahtlose Vorrichtung (1700) zum Durchführen des Verfahrens nach Anspruch 1 oder einem der Ansprüche 3 bis 13 abhängig von Anspruch 1 ausgelegt ist.

15. Basisstation (1400) zum Empfangen von Kanalzustandsinformationen, CSI, während einer Direktzugriffsprozedur, wobei die Basisstation (1400) Folgendes umfasst:

   einen oder mehrere Prozessoren (1404); und
   Speicher (1406), der Anweisungen umfasst, um die Basisstation (1400) zum Durchführen des Verfahrens nach Anspruch 2 oder einem der Ansprüche 3 bis 13 abhängig von Anspruch 2 zu veranlassen.

**Revendications**

1. Procédé réalisé par un dispositif sans fil pour rapporter des informations d'état de canal, CSI, le procédé comprenant :

   la détermination (800) d'au moins l'un parmi : un décalage de temporisation pour des CSI apériodiques sur un canal de commande de liaison montante physique, PUCCH ; et une ressource PUCCH à utiliser pour les CSI apériodiques ; et
   le rapport (802), au cours d'une procédure d'accès aléatoire, des CSI apériodiques sur le PUCCH en fonction de l'au moins un parmi le décalage de temporisation pour les CSI apériodiques sur le PUCCH et la ressource PUCCH à utiliser pour les CSI apériodiques,
   dans lequel la détermination de l'au moins un parmi le décalage de temporisation pour les CSI apériodiques sur le PUCCH et la ressource PUCCH à utiliser pour les CSI apériodiques comprend :
   la réception de l'au moins un parmi le décalage de temporisation pour les CSI apériodiques sur le PUCCH et la ressource PUCCH à utiliser pour les CSI apériodiques dans le cadre d'une réponse d'accès aléatoire, RAR, qui peut inclure un ou plusieurs parmi :

   message 2 d'une procédure d'accès aléatoire en 4 étapes ;
   successRAR d'une procédure d'accès aléatoire en 2 étapes ; et
   fallbackRAR lorsque le dispositif sans fil se replie de la procédure d'accès aléatoire en 2 étapes à la procédure d'accès aléatoire en 4 étapes, et
   dans lequel la ressource PUCCH indiquée provient d'un ensemble de ressources PUCCH qui est différent d'un ensemble de ressources PUCCH utilisé pour une rétroaction de demande de répétition automatique hybride, HARQ, indiquée par un champ « PUCCH resource indicator » dans des informations de commande de liaison descendante, DCI, 1-0 avec un contrôle de redondance cyclique, CRC, brouillé par un identifiant temporaire de réseau radio de cellule temporaire, TC-RNTI.

2. Procédé réalisé par une station de base pour la réception d'informations d'état de canal, CSI, le procédé comprenant :

   l'indication (900) d'au moins l'un parmi un décalage de temporisation pour des CSI apériodiques sur un canal de commande de liaison montante physique, PUCCH, et une ressource PUCCH à utiliser pour les CSI apériodiques ; et
   la réception (802), au cours d'une procédure d'accès aléatoire, d'un rapport de CSI apériodiques sur le PUCCH en fonction de l'au moins un parmi le décalage de temporisation pour les CSI apériodiques sur le PUCCH et la ressource PUCCH à utiliser pour les CSI apériodiques, dans lequel l'indication de l'au moins un parmi le décalage de temporisation pour les CSI apériodiques sur le PUCCH et la ressource PUCCH à utiliser pour les CSI apériodiques comprend :
   l'indication de l'au moins un parmi le décalage de temporisation pour les CSI apériodiques sur le PUCCH et la ressource PUCCH à utiliser pour les CSI apériodiques dans le cadre d'une réponse d'accès aléatoire, RAR, qui peut inclure un ou plusieurs parmi :

   message 2 d'une procédure d'accès aléatoire en 4 étapes ;
   successRAR d'une procédure d'accès aléatoire en 2 étapes ; et
   fallbackRAR lorsque le dispositif sans fil se replie de la procédure d'accès aléatoire en 2 étapes à la procédure d'accès aléatoire en 4 étapes,
   dans lequel la ressource PUCCH indiquée provient d'un ensemble de ressources PUCCH qui est différent d'un ensemble de ressources PUCCH utilisé pour une rétroaction de demande de répétition automatique hybride, HARQ, indiquée par un champ « PUCCH resource indicator » dans des informations de commande de liaison descendante, DCI, 1-0 avec un contrôle de redondance cyclique, CRC, brouillé par un identifiant temporaire de réseau radio de cellule temporaire, TC-RNTI.

3. Procédé selon la revendication 1 ou 2, dans lequel un champ « Aperiodic CSI, A-CSI, PUCCH Resource Indicator » dans le *successRAR* fournit une indication de la ressource PUCCH à utiliser pour une transmission A-CSI sur le PUCCH ; et facultativement

   dans lequel la ressource PUCCH indiquée provient d'un ensemble de ressources PUCCH qui est différent d'un ensemble de ressources PUCCH utilisé pour une rétroaction de demande de répétition automatique hybride, HARQ, indiquée par un champ « PUCCH Resource Indicator » dans le *successRAR,* et/ou
   dans lequel l'ensemble de ressources PUCCH à utiliser pour les A-CSI sur le PUCCH peut contenir l'un des formats PUCCH 2, 3 et 4.

4.  Procédé selon la revendication 1 ou 2, dans lequel un « A-CSI report timing indicator » dans le *successRAR* fournit une temporisation pour un rapport d'A-CSI sur le PUCCH.

5.  Procédé selon la revendication 4, dans lequel la temporisation fournie pour le rapport d'A-CSI sur le PUCCH peut être définie par rapport à un canal partagé de liaison descendante physique, PDSCH, qui porte le *successRAR,* ou dans lequel la temporisation fournie pour les A-CSI sur le PUCCH peut être définie par rapport au PUCCH qui porte une transmission HARQ.

6.  Procédé selon la revendication 1 ou 2, dans lequel un champ « Aperiodic CSI, A-CSI, PUCCH Resource Indicator » dans le *fallbackRAR* fournit une indication de la ressource PUCCH à utiliser pour une transmission A-CSI sur le PUCCH.

7.  Procédé selon la revendication 6, dans lequel l'ensemble de ressources PUCCH à utiliser pour les A-CSI sur le PUCCH peut contenir l'un des formats PUCCH 2, 3 et 4.

8.  Procédé selon la revendication 1 ou 2, dans lequel un « Aperiodic CSI, A-CSI, report timing indicator » dans le *fallbackRAR* fournit une temporisation pour un rapport d'A-CSI sur le PUCCH.

9.  Procédé selon la revendication 8, dans lequel la temporisation fournie pour les A-CSI sur le PUCCH peut être définie par rapport à un canal partagé de liaison descendante physique, PDSCH, qui porte le *fallbackRAR,* ou dans lequel la temporisation fournie pour les A-CSI sur le PUCCH peut être définie par rapport au PUCCH qui porte une transmission de demande de répétition automatique hybride, HARQ.

10. Procédé selon la revendication 1 ou 2, dans lequel un champ « Aperiodic CSI, A-CSI, PUCCH Resource Indicator » dans un message 2 RAR de la procédure d'accès aléatoire en 4 étapes fournit une indication de la ressource PUCCH à utiliser pour une transmission A-CSI sur le PUCCH ; et facultativement dans lequel la ressource PUCCH indiquée provient d'un ensemble de ressources PUCCH qui est différent de l'ensemble de ressources PUCCH utilisé pour une rétroaction de demande de répétition automatique hybride, HARQ, indiquée par le champ « PUCCH resource indicator » dans des informations de commande de liaison descendante, DCI, 1-0 avec un contrôle de redondance cyclique, CRC, brouillé par un identifiant temporaire de réseau radio de cellule temporaire, TC-RNTI.

11. Procédé selon la revendication 10, dans lequel l'ensemble de ressources PUCCH à utiliser pour les A-CSI sur le PUCCH peut contenir l'un des formats PUCCH 2, 3 et 4.

12. Procédé selon la revendication 1 ou 2, dans lequel un « Aperiodic CSI, A-CSI, report timing indicator » dans un message 2 RAR de la procédure d'accès aléatoire en 4 étapes fournit une temporisation pour un rapport d'A-CSI sur le PUCCH.

13. Procédé selon la revendication 12, dans lequel la temporisation fournie pour les A-CSI sur le PUCCH peut être définie par rapport à un canal partagé de liaison descendante physique, PDSCH, qui porte le message 2 RAR de la procédure d'accès aléatoire en 4 étapes, ou dans lequel la temporisation fournie pour les A-CSI sur le PUCCH peut être définie par rapport au PUCCH qui porte une transmission de demande de répétition automatique hybride, HARQ.

14. Dispositif sans fil (1700) pour rapporter des informations d'état de canal, CSI, au cours d'une procédure d'accès aléatoire, le dispositif sans fil (1700) comprenant :

    un ou plusieurs processeurs (1702) ; et
    une mémoire (1704) stockant des instructions exécutables par les un ou plusieurs processeurs, selon lesquelles le dispositif sans fil (1700) est fonctionnel pour réaliser le procédé selon la revendication 1 ou l'une quelconque des revendications 3 à 13 dépendant de la revendication 1.

15. Station de base (1400) pour recevoir des informations d'état de canal, CSI, au cours d'une procédure d'accès aléatoire, la station de base (1400) comprenant :

    un ou plusieurs processeurs (1404) ; et

une mémoire (1406) comprenant des instructions pour amener la station de base (1400) à réaliser le procédé selon la revendication 2 ou l'une quelconque des revendications 3 à 13 dépendant de la revendication 2.

FIG. 1

FIG. 2

(A) ONE SYMBOL PUCCH

(B) TWO SYMBOL PUCCH

FIG. 3

(A) 14 SYMBOL PUCCH

(B) 7 SYMBOL PUCCH

FIG. 4

EP 4 226 554 B1

(A) 14 SYMBOL PUCCH

(B) 7 SYMBOL PUCCH

*FIG. 5*

**FIG. 6**

(A) INTER-SLOT FH ENABLED

(A) INTER-SLOT FH DISABLED, AND INTRA-SLOT FH ENABLED

*FIG. 7*

EP 4 226 554 B1

BEGIN

DETERMINE AT LEAST ONE OF: A TIMING OFFSET FOR THE APERIODIC CSI ON PUCCH; AND A PUCCH RESOURCE TO BE USED FOR THE APERIODIC CSI
800

REPORT APERIODIC CSI ON PUCCH ACCORDING TO THE AT LEAST ONE OF THE TIMING OFFSET FOR THE APERIODIC CSI ON PUCCH AND THE PUCCH RESOURCE TO BE USED FOR THE APERIODIC CSI
802

END

**FIG. 8**

BEGIN

INDICATE AT LEAST ONE OF: A TIMING OFFSET FOR THE APERIODIC CSI ON PUCCH; AND A PUCCH RESOURCE TO BE USED FOR THE APERIODIC CSI
900

RECEIVE APERIODIC CSI ON PUCCH ACCORDING TO THE AT LEAST ONE OF THE TIMING OFFSET FOR THE APERIODIC CSI ON PUCCH AND THE PUCCH RESOURCE TO BE USED FOR THE APERIODIC CSI
902

END

**FIG. 9**

**FIG. 10**

| | | |
|---|---|---|
| UE Contention Resolution Identity | | Oct 1 |
| UE Contention Resolution Identity | | Oct 2 |
| UE Contention Resolution Identity | | Oct 3 |
| UE Contention Resolution Identity | | Oct 4 |
| UE Contention Resolution Identity | | Oct 5 |
| UE Contention Resolution Identity | | Oct 6 |
| R / Channel Access-CPext / TPC / HARQ Feedback Timing Indicator | | Oct 7 |
| PUCCH Resource Indicator / Timing Advance Command | | Oct 8 |
| Timing Advance Command | | Oct 9 |
| C-RNTI | | Oct 10 |
| C-RNTI | | Oct 11 |
| A-CSI PUCCH Resource Indicator / R / A-CSI Report Timing Indicator | | Oct 12 |

*FIG. 11*

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |
| A-CSI PUCCH Resource Indicator \| R \| A-CSI Report Timing Indicator | | Oct 8 |

*FIG. 12*

*FIG. 13*

EP 4 226 554 B1

1400

CONTROL SYSTEM
1402

NETWORK
INTERFACE
1408

PROCESSOR(S)
1404

MEMORY
1406

RADIO UNIT(S)
1410

TX(S) 1412

RX(S) 1414

1416

1416

*FIG. 14*

RADIO ACCESS NODE
1400

MODULE(S)
1600

*FIG. 16*

**FIG. 15**

EP 4 226 554 B1

FIG. 17

FIG. 18

**FIG. 19**

**FIG. 20**

BEGIN

HOST COMPUTER
PROVIDES USER DATA
2100

HOST COMPUTER
EXECUTES HOST
APPLICATION
2102

HOST COMPUTER
INITIATES
TRANSMISSION
CARRYING THE USER
DATA TO THE UE
2104

BASE STATION
TRANSMITS THE USER
DATA
2106

UE EXECUTES THE
CLIENT APPLICATION
2108

END

*FIG. 21*

BEGIN

HOST COMPUTER
PROVIDES USER DATA
2200

HOST COMPUTER
INITIATES
TRANSMISSION
CARRYING THE USER
DATA TO THE UE
2202

UE RECEIVES THE USER
DATA
2204

END

*FIG. 22*

BEGIN

UE RECEIVES INPUT
DATA PROVIDED AT
HOST COMPUTER
2300

UE EXECUTES
CLIENT
APPLICATION
2304

UE PROVIDES USER
DATA
2302

UE EXECUTES
CLIENT
APPLICATION
2306

UE INITIATES
TRANSMISSION OF THE
USER DATA TO THE
HOST COMPUTER
2308

HOST COMPUTER
RECEIVES USER DATA
TRANSMITTED FROM
THE UE
2310

END

**FIG. 23**

BEGIN

BASE STATION
RECEIVES USER DATA
FROM UE
2400

BASE STATION INITIATES
TRANSMISSION OF USER
DATA TO THE HOST
COMPUTER
2402

HOST COMPUTER
RECEIVES THE USER
DATA
2404

END

**FIG. 24**

44

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020120282 W

- US 20200295903

**Non-patent literature cited in the description**

- **MOTORLA MOBILITY et al.** 2-step RACH procedure. *3GPP Draft; R1-1911035*